# EUROPEAN PATENT APPLICATION

(11) **EP 4 383 821 A1**
(43) Date of publication of application: **12.06.2024**
(21) Application number: 22852936.8
(22) Date of filing: 28.07.2022
(51) Int. Cl.: H04W 36/18, H04W 16/32, H04W 72/04, H04W 72/12

(54) **COMMUNICATION SYSTEM**

(30) Priority: 03.08.2021 JP 2021127565
(71) Applicant: MITSUBISHI ELECTRIC CORPORATION, Chiyoda-ku Tokyo 100-8310 (JP)
(72) Inventor: MOCHIZUKI, Mitsuru, Tokyo 100-8310 (JP); SHIMODA, Tadahiro, Tokyo 100-8310 (JP)
(74) Representative: Meissner Bolte Partnerschaft mbB
(86) International application number: PCT/JP2022/029065
(87) International publication number: WO 2023/013513

(57) **Abstract**

A communication system includes: a master base station that is a base station that operates as a master node of dual connectivity in which a communication terminal simultaneously connects to two base stations; and a secondary base station that is a base station that operates as a secondary node of the dual connectivity, and in a case where a second connection destination change process is required while executing a first connection destination change process that is a process in which a communication terminal changes a master node as a connection destination or a process in which a communication terminal changes a secondary node as a connection destination, the second connection destination change process being a process not falling under the first connection destination change process out of a process in which the master node is changed and a process in which the secondary node is changed, the second connection destination change process is started and the first connection destination change process is canceled.

## Description

### Field

The present disclosure relates to a radio communication technology.

### Background

The 3rd Generation Partnership Project (3GPP), which is a standard organization of mobile communication systems, has been studying a communication system called long term evolution (LTE) for radio sections and called system architecture evolution (SAE) for an entire system configuration including a core network and a radio access network (hereinafter, also collectively referred to as a network) (for example, Non Patent Literatures 1 to 5). The communication system is also referred to as a 3.9 generation (3.9 G) system.

As an access scheme of LTE, orthogonal frequency division multiplexing (OFDM) is used in a downlink direction, and single carrier frequency division multiple access (SC-FDMA) is used in an uplink direction. In addition, unlike wideband code division multiple access (W-CDMA), LTE does not provide circuit switching and provides only a packet communication system.

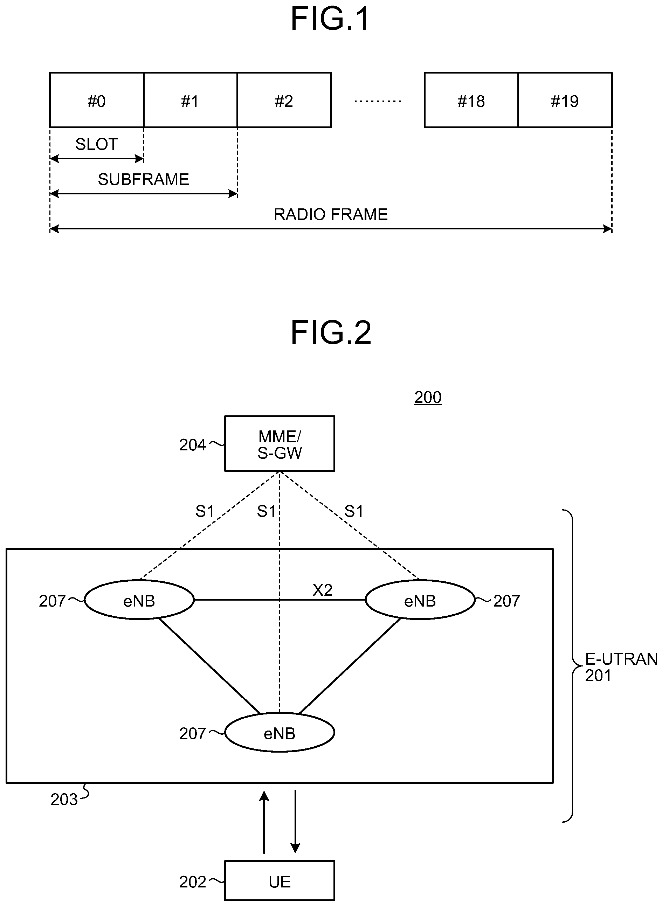

Decisions by 3GPP regarding a frame configuration in an LTE system described in Non Patent Literature 1 (Chapter 5) will be described with reference to FIG. 1. FIG. 1 is an explanatory diagram illustrating a configuration of a radio frame used in an LTE communication system. In FIG. 1, one radio frame is 10 ms. The radio frame is divided into 10 equally sized subframes. The subframe is divided into two equally sized slots. Downlink synchronization signals are included in first and sixth subframes in each radio frame. The synchronization signals are classified into a primary synchronization signal (P-SS) and a secondary synchronization signal (S-SS).

Decisions by 3GPP regarding a channel configuration in the LTE system are described in Non Patent Literature 1 (Chapter 5). It is assumed that also in a closed subscriber group (CSG) cell, the same channel configuration as that of a non-CSG cell is used.

A physical broadcast channel (PBCH) is a channel for downlink transmission from a base station device (hereinafter, sometimes simply referred to as a "base station") to a communication terminal device (hereinafter, sometimes simply referred to as a "communication terminal") such as a user equipment device (hereinafter, sometimes simply referred to as "user equipment"). A BCH transport block is mapped to four subframes in a 40-ms interval. There is no explicit signaling of 40-ms timing.

A physical control format indicator channel (PCFICH) is a channel for downlink transmission from a base station to a communication terminal. The PCFICH notifies the number of orthogonal frequency division multiplexing (OFDM) symbols used for PDCCHs from the base station to the communication terminal. The PCFICH is transmitted on a per subframe basis.

A physical downlink control channel (PDCCH) is a channel for downlink transmission from a base station to a communication terminal. The PDCCH provides resource allocation information of a downlink shared channel (DL-SCH) which is one of transport channels to be described later, resource allocation information of a paging channel (PCH) which is one of the transport channels to be described later, and hybrid automatic repeat request (HARQ) information about the DL-SCH. The PDCCH carries an uplink scheduling grant. The PDCCH carries acknowledgement (Ack)/negative acknowledgement (Nack) which is a response signal to uplink transmission. The PDCCH is also referred to as an L1/L2 control signal.

A physical downlink shared channel (PDSCH) is a channel for downlink transmission from a base station to a communication terminal. The downlink shared channel (DL-SCH) which is a transport channel and the PCH which is a transport channel are mapped to the PDSCH.

A physical multicast channel (PMCH) is a channel for downlink transmission from a base station to a communication terminal. A multicast channel (MCH) which is a transport channel is mapped to the PMCH.

A physical uplink control channel (PUCCH) is a channel for uplink transmission from a communication terminal to a base station. The PUCCH carries Ack/Nack which is a response signal to downlink transmission. The PUCCH carries channel state information (CSI). The CSI includes a rank indicator (RI), a precoding matrix indicator (PMI), and a channel quality indicator (CQI) report. The RI is rank information of a channel matrix in MIMO. The PMI is information on a precoding weight matrix used in MIMO. The CQI is quality information indicating quality of received data or channel quality. In addition, the PUCCH carries a scheduling request (SR).

A physical uplink shared channel (PUSCH) is a channel for uplink transmission from a communication terminal to a base station. An uplink shared channel (UL-SCH) which is one of the transport channels is mapped to the PUSCH.

A physical hybrid ARQ (HARQ) indicator channel (PHICH) is a channel for downlink transmission from a base station to a communication terminal. The PHICH carries Ack/Nack which is a response signal to uplink transmission. A physical random access channel (PRACH) is a channel for uplink transmission from a communication terminal to a base station. The PRACH carries a random access preamble.

A downlink reference signal (RS) is a symbol known in the LTE communication system. The following five types of downlink reference signals are defined. The signals are cell-specific reference signal (CRS), an MBSFN reference signal, a data demodulation reference signal (DM-RS) which is a UE-specific reference signal, a positioning reference signal (PRS), and a channel state information reference signal (CSI-RS). As a measurement of a physical layer of a communication terminal, there is a measurement of reference signal received power (RSRP).

Similarly, an uplink reference signal is a symbol known in the LTE communication system. The following two types of uplink reference signals are defined. The signals are a data demodulation reference signal (DMRS) and a sounding reference signal (SRS).

Transport channels described in Non Patent Literature 1 (Chapter 5) will be described. Among downlink transport channels, a broadcast channel (BCH) is broadcast in the entire coverage area of the base station (cell). The BCH is mapped to the physical broadcast channel (PBCH).

Retransmission control by hybrid ARQ (HARQ) is applied to the downlink shared channel (DL-SCH). The DL-SCH can be broadcast in the entire coverage area of the base station (cell). The DL-SCH supports dynamic or semi-static resource allocation. The semi-static resource allocation is also referred to as persistent scheduling. The DL-SCH supports discontinuous reception (DRX) of a communication terminal in order to reduce power consumption of the communication terminal. The DL-SCH is mapped to the physical downlink shared channel (PDSCH).

The paging channel (PCH) supports DRX of a communication terminal in order to enable the communication terminal to reduce power consumption. The PCH is required to be broadcast in the entire coverage area of the base station (cell). The PCH is mapped to a physical resource such as the physical downlink shared channel (PDSCH) that can be dynamically used for traffic.

A multicast channel (MCH) is used for broadcast in the entire coverage area of the base station (cell). The MCH supports SFN combining of multimedia broadcast multicast service (MBMS) services (MTCH and MCCH) in multi-cell transmission. The MCH supports semi-static resource allocation. The MCH is mapped to the PMCH.

Retransmission control by hybrid ARQ (HARQ) is applied to the uplink shared channel (UL-SCH) among the uplink transport channels. The UL-SCH supports dynamic or semi-static resource allocation. The UL-SCH is mapped to the physical uplink shared channel (PUSCH).

A random access channel (RACH) is limited to control information. The RACH has a risk of collision. The RACH is mapped to the physical random access channel (PRACH) .

The HARQ will be described. The HARQ is a technology for improving communication quality of a transmission path by a combination of automatic repeat request (ARQ) and error correction (forward error correction). The HARQ has an advantage that error correction effectively functions by retransmission even for a transmission path whose communication quality changes. In particular, it is also possible to further improve the quality in retransmission by combining a reception result of first transmission and a reception result of the retransmission.

An example of a retransmission method will be described. In a case where a receiver cannot correctly decode received data, in other words, in a case where a cyclic redundancy check (CRC) error occurs (CRC=NG), "Nack" is transmitted from the receiver to a transmitter. The transmitter that has received "Nack" retransmits the data. In a case where the receiver can correctly decode received data, in other words, in a case where a CRC error does not occur (CRC=OK), "Ack" is transmitted from the receiver to the transmitter. The transmitter that has received "Ack" transmits next data.

A logical channel described in Non Patent Literature 1 (Chapter 6) will be described. A broadcast control channel (BCCH) is a downlink channel for broadcast system control information. The BCCH which is a logical channel is mapped to the broadcast channel (BCH) or the downlink shared channel (DL-SCH) each of which is a transport channel.

A paging control channel (PCCH) is a downlink channel for transmitting changes in paging information and system information. The PCCH is used in a case when the network does not know the cell location of a communication terminal. The PCCH which is a logical channel is mapped to the paging channel (PCH) which is a transport channel.

A common control channel (CCCH) is a channel for transmission control information between a communication terminal and a base station. The CCCH is used in a case where the communication terminal has no RRC connection with the network. In the downlink direction, the CCCH is mapped to the downlink shared channel (DL-SCH) which is a transport channel. In the uplink direction, the CCCH is mapped to the uplink shared channel (UL-SCH) which is a transport channel.

A multicast control channel (MCCH) is a downlink channel for point-to-multipoint transmission. The MCCH is used for transmission of MBMS control information for one or several MTCHs from the network to a communication terminal. The MCCH is used only by a communication terminal that is receiving the MBMS. The MCCH is mapped to the multicast channel (MCH) which is a transport channel.

A dedicated control channel (DCCH) is a channel for transmitting dedicated control information between a communication terminal and the network on a point-to-point basis. The DCCH is used in a case where the communication terminal has an RRC connection. The DCCH is mapped to the uplink shared channel (UL-SCH) in uplink, and is mapped to the downlink shared channel (DL-SCH) in downlink.

A dedicated traffic channel (DTCH) is a point-to-point communication channel for transmitting user information to a dedicated communication terminal. The DTCH exists in both uplink and downlink. The DTCH is mapped to the uplink shared channel (UL-SCH) in uplink, and is mapped to the downlink shared channel (DL-SCH) in downlink.

A multicast traffic channel (MTCH) is a downlink channel for transmitting traffic data from the network to a communication terminal. The MTCH is a channel used only by a communication terminal that is receiving the MBMS. The MTCH is mapped to the multicast channel (MCH).

CGI represents a cell global identifier. ECGI represents an E-UTRAN cell global identifier. A closed subscriber group (CSG) cell is introduced into LTE, long term evolution advanced (LTE-A) described later, and universal mobile telecommunication system (UMTS).

Location tracking of communication terminals is performed in units of areas each including one or more cells. The location tracking is performed in order to track the location of a communication terminal to call the communication terminal, in other words, in order to enable the communication terminal to receive an incoming call, even in an idle state. An area for the location tracking of communication terminals is referred to as a tracking area.

Furthermore, in 3GPP, as Release 10, formulation of long term evolution advanced (LTE-A) standard is in progress (see Non Patent Literatures 3 and 4). LTE-A is based on an LTE radio section communication system, and is configured by adding some new technologies to the system.

Regarding the LTE-A system, in order to support wider transmission bandwidths up to 100 MHz, carrier aggregation (CA) for aggregating two or more component carriers (CCs) is under study. The CA is described in Non Patent Literature 1.

In a case where the CA is configured, a UE which is a communication terminal has only one RRC connection with a network (NW). In the RRC connection, one serving cell provides NAS mobility information and security input. This cell is referred to as a primary cell (PCell). In downlink, a carrier corresponding to the PCell is a downlink primary component carrier (DL PCC). In uplink, a carrier corresponding to the PCell is an uplink primary component carrier (UL PCC).

Depending on the capability of the UE, a secondary cell (SCell) is configured to form a set of serving cells with the PCell. In downlink, a carrier corresponding to the SCell is a downlink secondary component carrier (DL SCC). In uplink, a carrier corresponding to the SCell is an uplink secondary component carrier (UL SCC).

A set of serving cells including one PCell and one or more SCells is configured for one UE.

In addition, new technologies in LTE-A include a technology for supporting wider bands (wider bandwidth extension), a coordinated multiple point transmission and reception (CoMP) technology. The CoMP studied for LTE-A in 3GPP is described in Non Patent Literature 1.

In addition, use of a small eNB (hereinafter, sometimes referred to as a "small-scale base station device") configuring a small cell has been studied in 3GPP in order to cope with enormous traffic in the future. For example, a technology is under study with which a large number of small eNBs are installed to configure a large number of small cells, thereby improving spectral efficiency to increase communication capacity. Specifically, there is dual connectivity (abbreviated as DC) with which a UE is connected to two eNBs to perform communication. The DC is described in Non Patent Literature 1.

One of the eNBs that perform dual connectivity (DC) may be referred to as a "master eNB (abbreviated as MeNB)", and the other thereof may be referred to as a "secondary eNB (abbreviated as SeNB)".

The traffic volume of a mobile network is on the increase, and the communication speed is also increasing. When operations of LTE and LTE-A are fully started, the communication speed is expected to be further increased.

Furthermore, for increasingly advanced mobile communication, a fifth generation (hereinafter, sometimes referred to as "5G") radio access system has been studied whose service is aimed to be launched in or after 2020. For example, in Europe, 5G requirements are compiled by an organization called METIS (see Non Patent Literature 5).

For the 5G radio access system, the followings are exemplified as requirements: as compared with the LTE system, the system capacity is 1000 times, the data transmission speed is 100 times, the data processing latency is one-tenth (1/10), the number of simultaneously connected communication terminals is 100 times, and further reduction in power consumption and reduction in device cost are achieved.

In order to satisfy such requirements, 5G standards have been studied as Release 15 in 3GPP (see Non Patent Literatures 6 to 19). The technology of 5G radio sections is referred to as "new radio access technology" ("new radio" is abbreviated as "NR").

An NR system has been studied on the basis of the LTE system and the LTE-A system, but includes additions and changes from the LTE system and the LTE-A system in the following points.

As an access scheme of NR, OFDM is used in the downlink direction, and OFDM and DFT-spread-OFDM (DFT-s-OFDM) are used in the uplink direction.

In NR, frequencies higher than those in LTE can be used to improve the transmission speed and to reduce the processing latency.

In NR, cell coverage is ensured by forming a narrow beam-shaped transmission/reception range (beamforming) and changing a direction of the beam (beam sweeping).

In a frame configuration of NR, various subcarrier spacings, that is, various numerologies, are supported. Regardless of the numerologies, one subframe is 1 millisecond long, and one slot includes 14 symbols in NR. In addition, the number of slots included in one subframe is one in a numerology with a subcarrier spacing of 15 kHz, and increases in proportion to subcarrier spacings in other numerologies (see Non Patent Literature 13 (3GPP TS38.211)).

A downlink synchronization signal in NR is transmitted as a synchronization signal burst (hereinafter, sometimes referred to as an SS burst) from a base station at a predetermined period for a predetermined duration. The SS burst includes a synchronization signal block (hereinafter, sometimes referred to as an SS block) for each beam of the base station.

The base station transmits the SS blocks of respective beams within the duration of the SS burst while changing the beams. The SS block includes the P-SS, the S-SS, and the PBCH.

In NR, a phase tracking reference signal (PTRS) is added as a downlink reference signal of NR, and thereby an influence of phase noise is reduced. Regarding an uplink reference signal as well, the PTRS is added similarly to the downlink.

In NR, a slot format indication (SFI) has been added to information included in the PDCCH in order to perform flexible switching between the DL and the UL in a slot.

Furthermore, in NR, the base station sets a part of a carrier frequency band (hereinafter, sometimes referred to as bandwidth part (BWP)) in advance for a UE, and the UE performs transmission and reception with the base station in the BWP, thereby reducing power consumption in the UE.

In 3GPP, as a form of the DC, DC performed by an LTE base station and an NR base station connected to an EPC, DC performed by NR base stations connected to a 5G core system, and DC performed by an LTE base station and an NR base station connected to the 5G core system have been studied (see Non Patent Literatures 12, 16, and 19).

In addition, in 3GPP, support of a service (which may be an application) using sidelink (SL) communication (also referred to as PC5 communication) in both an evolved packet system (EPS) to be described later and a 5G core system has been studied (see Non Patent Literatures 1, 16, 20, 21, 22, and 23). In the SL communication, communication is performed between terminals. Examples of the service using the SL communication include a vehicle-to-everything (V2X) service and a proximity service. In the SL communication, not only direct communication between terminals but also communication between a UE and an NW via a relay has been proposed (see Non Patent Literatures 20, 23, 26, and 27) .

In addition, several new technologies have been studied in 3GPP. For example, in LTE, make-before-break (MBB) handover (HO), RACH-less HO, and the like have been studied to shorten communication interruption time upon mobility (see Non Patent Literature 1 TS 36.300). In addition, conditional HO (CHO) has been studied to improve robustness upon mobility (see Non Patent Literature 16 TS 38.300) .

As another example, conditional PSCell change (CPC) has been studied to improve robustness in a dual connectivity (DC) configuration process (see Non Patent Literature 12 TS 37.340).

### Citation List

### Non Patent Literature

Non Patent Literature 1: 3GPP TS 36.300 V16.5.0
Non Patent Literature 2: 3GPP S1-083461
Non Patent Literature 3: 3GPP TR 36.814 V9.2.0
Non Patent Literature 4: 3GPP TR 36.912 V16.0.0
Non Patent Literature 5: "Scenarios, requirements and KPIs for 5G mobile and wireless system", ICT-317669-METIS/D1.1
Non Patent Literature 6: 3GPP TR 23.799 V14.0.0
Non Patent Literature 7: 3GPP TR 38.801 V14.0.0
Non Patent Literature 8: 3GPP TR 38.802 V14.2.0
Non Patent Literature 9: 3GPP TR 38.804 V14.0.0
Non Patent Literature 10: 3GPP TR 38.912 V16.0.0
Non Patent Literature 11: 3GPP RP-172115
Non Patent Literature 12: 3GPP TS 37.340 V16.5.0
Non Patent Literature 13: 3GPP TS 38.211 V16.5.0
Non Patent Literature 14: 3GPP TS 38.213 V16.5.0
Non Patent Literature 15: 3GPP TS 38.214 V16.5.0
Non Patent Literature 16: 3GPP TS 38.300 V16.5.0
Non Patent Literature 17: 3GPP TS 38.321 V16.4.0
Non Patent Literature 18: 3GPP TS 38.212 V16.5.0
Non Patent Literature 19: 3GPP TS 38.331 V16.4.1
Non Patent Literature 20: 3GPP TR 23.703 V12.0.0
Non Patent Literature 21: 3GPP TS 23.501 V17.0.0
Non Patent Literature 22: 3GPP T S23.287 V16.5.0
Non Patent Literature 23: 3GPP TS 23.303 V16.0.0
Non Patent Literature 24: 3GPP TS 38.305 V16.4.0
Non Patent Literature 25: 3GPP TS 23.273 V17.0.0
Non Patent Literature 26: 3GPP R2-2009145
Non Patent Literature 27: 3GPP TR 38.836 V17.0.0
Non Patent Literature 28: 3GPP RWS-210196
Non Patent Literature 29: 3GPP RWS-210078
Non Patent Literature 30: 3GPP RWS-210183

### Summary of Invention

### Problem to be solved by the Invention

In 5G, a dense network is formed with increasing frequency, and therefore, it is assumed that change of a base station and HO frequently occur. In such an NW, it is required to reduce communication interruption time and to improve the robustness and reliability of communication. Therefore, 3GPP has proposed studies of, for example, a combination of CHO and CPC, and MBB HO and RACH-less HO in NR, as a mobility enhancement technology and a DC enhancement technology (Non Patent Literature 28 RWS-210196 and Non Patent Literature 29 RWS-210078). However, there is no disclosure of specific methods of these enhancement technologies. Accordingly, these enhancement technologies cannot be executed, which causes problems that communication interruption time cannot be reduced and the robustness and reliability of communication cannot be improved.

In view of the above problems, an object of the present disclosure is to improve reliability of communication to which dual connectivity is applied in a communication system.

### Means to Solve the Problem

A communication system according to the present disclosure includes: a master base station that is a base station that operates as a master node of dual connectivity in which a communication terminal simultaneously connects to two base stations; and a secondary base station that is a base station that operates as a secondary node of the dual connectivity, wherein in a case where a second connection destination change process is required while executing a first connection destination change process that is a process in which a communication terminal changes a master node as a connection destination or a process in which a communication terminal changes a secondary node as a connection destination, the second connection destination change process being a process not falling under the first connection destination change process out of a process in which the master node is changed and a process in which the secondary node is changed, the second connection destination change process is started and the first connection destination change process is canceled.

### Effects of the Invention

The communication system according to the present disclosure achieves an effect that it is possible to improve reliability of communication to which dual connectivity is applied.

Objects, features, aspects, and advantages of the present disclosure will become more apparent from the following detailed description and the accompanying drawings.

### Brief Description of Drawings

FIG. 1 is an explanatory diagram illustrating a configuration of a radio frame used in an LTE communication system.
FIG. 2 is a block diagram illustrating an overall configuration of an LTE communication system 200 that has been discussed in 3GPP.
FIG. 3 is a block diagram illustrating an overall configuration of an NR communication system 210 that has been discussed in 3GPP.
FIG. 4 is a configuration diagram of DC performed by an eNB and a gNB connected to an EPC.
FIG. 5 is a configuration diagram of DC performed by gNBs connected to an NG core.
FIG. 6 is a configuration diagram of DC performed by an eNB and the gNB connected to the NG core.
FIG. 7 is a configuration diagram of DC performed by an eNB and the gNB connected to the NG core.
FIG. 8 is a block diagram illustrating a configuration of user equipment 202 illustrated in FIG. 2.
FIG. 9 is a block diagram illustrating a configuration of a base station 203 illustrated in FIG. 2.
FIG. 10 is a block diagram illustrating a configuration of an MME.
FIG. 11 is a block diagram illustrating a configuration of a 5GC unit.
FIG. 12 is a flowchart schematically illustrating a cell search to an idle state operation performed by a communication terminal (UE) in the LTE communication system.
FIG. 13 is a diagram illustrating an example of a configuration of a cell in an NR system.
FIG. 14 is a diagram of a first half of a sequence illustrating an example of a method for executing CPC during execution of CHO of a master node (MN) in a first embodiment.
FIG. 15 is a diagram of a second half of the sequence illustrating the example of the method for executing the CPC during execution of the CHO of the MN in the first embodiment.
FIG. 16 is a diagram of a first half of a sequence illustrating an example of a method for executing the CHO of the MN during execution of the CPC in a first modification of the first embodiment.
FIG. 17 is a diagram of a second half of the sequence illustrating the example of the method for executing the CHO of the MN during execution of the CPC in the first modification of the first embodiment.
FIG. 18 is a diagram of a first half of a sequence illustrating an example of a method for executing both of the CHO of the MN and the CPC in a second modification of the first embodiment.
FIG. 19 is a diagram of a second half of the sequence illustrating the example of the method for executing both of the CHO of the MN and the CPC in the second modification of the first embodiment.

### Description of Embodiments

Hereinafter, a communication system according to each embodiment of the present disclosure will be described in detail with reference to the drawings.

### First Embodiment.

FIG. 2 is a block diagram illustrating an overall configuration of an LTE communication system 200 that has been discussed in 3GPP. FIG. 2 will be described. A radio access network is referred to as an evolved universal terrestrial radio access network (E-UTRAN) 201. A user equipment device (hereinafter referred to as "user equipment (UE)") 202 which is a communication terminal device can perform radio communication with a base station device (hereinafter referred to as "base station (E-UTRAN NodeB (eNB))") 203, and transmits and receives signals by radio communication.

Here, the "communication terminal device" includes not only a user equipment device such as a mobile phone terminal device that is movable, but also a non-moving device such as a sensor. In the following description, the "communication terminal device" may be simply referred to as a "communication terminal".

If a control protocol for the user equipment 202, for example, radio resource control (RRC), and a user plane (hereinafter, sometimes referred to as a U-plane), for example, a packet data convergence protocol (PDCP), radio link control (RLC), medium access control (MAC), or a physical layer (PHY), are terminated in the base station 203, the E-UTRAN includes one or a plurality of base stations 203.

Radio resource control (RRC) as a control protocol between the user equipment 202 and the base station 203 performs broadcast, paging, RRC connection management, and the like. As states of the base station 203 and the user equipment 202 in RRC, there are RRC_IDLE and RRC_CONNECTED.

In RRC_IDLE, public land mobile network (PLMN) selection, broadcast of system information (SI), paging, cell re-selection, mobility, and the like are performed. In RRC_CONNECTED, the user equipment has RRC connection and can transmit and receive data to and from a network. In addition, in RRC_CONNECTED, handover (HO), measurement of a neighbor cell, and the like are performed.

The base station 203 includes one or a plurality of eNBs 207. A system including an evolved packet core (EPC) which is a core network and the E-UTRAN 201 which is a radio access network is referred to as an evolved packet system (EPS). The EPC which is a core network and the E-UTRAN 201 which is a radio access network may be collectively referred to as a "network".

Each eNB 207 is connected via an S1 interface to an MME/S-GW unit (hereinafter, sometimes referred to as an "MME unit") 204 including a mobility management entity (MME) or a serving gateway (S-GW), or the MME and the S-GW, and control information is communicated between the eNB 207 and the MME unit 204. A plurality of MME units 204 may be connected to one eNB 207. The eNBs 207 are connected to each other via an X2 interface, and the control information is communicated between the eNBs 207.

The MME unit 204 is a higher-level device, specifically, a higher-level node, and controls connection between the eNB 207 which is a base station and the user equipment (UE) 202. The MME unit 204 configures the EPC which is a core network. The base station 203 configures the E-UTRAN 201.

The base station 203 may configure one cell or a plurality of cells. Each cell has a predetermined range as a coverage which is a range in which communication with the user equipment 202 is possible, and performs radio communication with the user equipment 202 within the coverage. In a case where one base station 203 configures a plurality of cells, each cell is configured to be able to communicate with the user equipment 202.

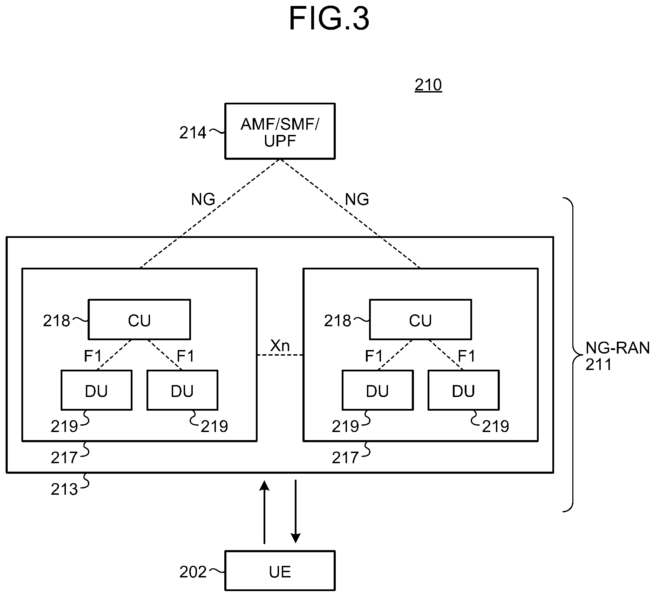

FIG. 3 is a block diagram illustrating an overall configuration of a 5G communication system 210 that has been discussed in 3GPP. FIG. 3 will be described. The radio access network is referred to as a next generation radio access network (NG-RAN) 211. The UE 202 can perform radio communication with an NR base station device (hereinafter referred to as an "NR base station (NG-RAN NodeB (gNB))") 213, and transmits and receives signals by radio communication. The core network is referred to as a 5G core (5GC).

If a control protocol for the UE 202, for example, radio resource control (RRC), and a user plane (hereinafter, sometimes referred to as a U-plane), for example, service data adaptation protocol (SDAP), packet data convergence protocol (PDCP), radio link control (RLC), medium access control (MAC), or physical layer (PHY), are terminated in the NR base station 213, the NG-RAN includes one or a plurality of NR base stations 213.

A function of radio resource control (RRC) as a control protocol between the UE 202 and the NR base station 213 is similar to that of LTE. As states of the NR base station 213 and the UE 202 in RRC, there are RRC_IDLE, RRC_CONNECTED, and RRC_INACTIVE.

RRC_IDLE and RRC_CONNECTED are similar to those in the LTE system. In RRC_INACTIVE, broadcast of system information (SI), paging, cell re-selection, mobility, and the like are performed while connection between the 5G core and the NR base station 213 is maintained.

Each gNB 217 is connected via an NG interface to an AMF/SMF/UPF unit (hereinafter, sometimes referred to as a "5GC unit") 214 including an access and mobility management function (AMF), a session management function (SMF), or a user plane function (UPF), or the AMF, the SMF, and the UPF. Control information and/or user data is communicated between each gNB 217 and the 5GC unit 214. The NG interface is a generic term for an N2 interface between each gNB 217 and the AMF, an N3 interface between each gNB 217 and the UPF, an N11 interface between the AMF and the SMF, and an N4 interface between the UPF and the SMF. A plurality of 5GC units 214 may be connected to one gNB 217. The gNBs 217 are connected to each other via an Xn interface, and control information and/or user data is communicated between the gNBs 217.

The 5GC unit 214 is a higher-level device, specifically, a higher-level node, and distributes paging signals to one or a plurality of base stations 203 and/or base stations 213. In addition, the 5GC unit 214 performs mobility control in an idle state. The 5GC unit 214 manages a tracking area list when the user equipment 202 is in the idle state, an inactive state, and an active state. The 5GC unit 214 starts a paging protocol by transmitting a paging message to a cell belonging to a tracking area in which the user equipment 202 is registered.

The NR base station 213 may also configure one or a plurality of cells similarly to the base station 203. In a case where one NR base station 213 configures a plurality of cells, each cell is configured to be able to communicate with the UE 202.

The gNB 217 may be divided into a central unit (hereinafter, sometimes referred to as a CU) 218 and a distributed unit (hereinafter, sometimes referred to as a DU) 219. One CU 218 is configured in the gNB 217. One or a plurality of DUs 219 are configured in the gNB 217. The CU 218 is connected to the DU 219 via the F1 interface, and control information and/or user data is communicated between the CU 218 and the DU 219.

A unified data management (UDM) function and a policy control function (PCF) described in Non Patent Literature 21 (3GPP TS23.501) may be included in the 5G communication system. The UDM and/or the PCF may be included in the 5GC unit 214 in FIG. 3.

A location management function (LMF) described in Non Patent Literature 24 (3GPP TS 38.305) may be provided in the 5G communication system. The LMF may be connected to a base station via the AMF as disclosed in Non Patent Literature 25 (3GPP TS 23.273).

A non-3GPP interworking function (N3IWF) described in Non Patent Literature 21 (3GPP TS23.501) may be included in the 5G communication system. The N3IWF may terminate an access network (AN) with the UE in non-3GPP access with the UE.

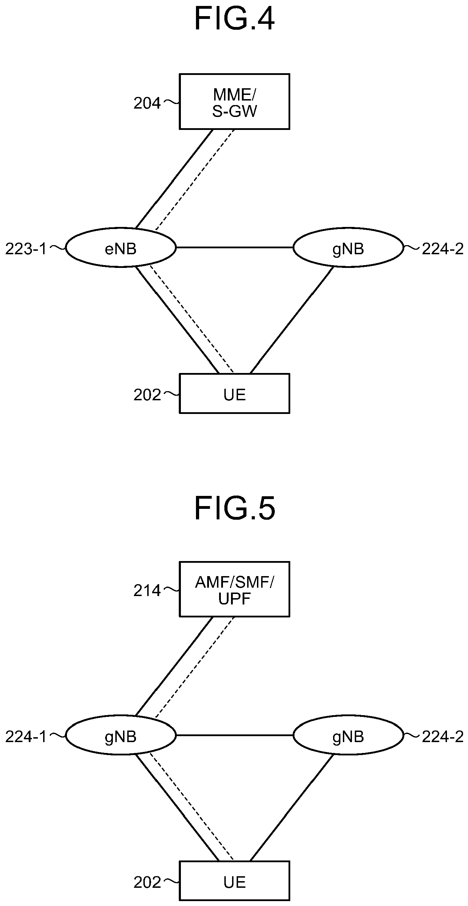

FIG. 4 is a diagram illustrating a configuration of DC performed by an eNB and a gNB connected to the EPC. In FIG. 4, solid lines each indicate U-plane connection, and broken lines each indicate C-plane connection. In FIG. 4, an eNB 223-1 serves as a master base station, and a gNB 224-2 serves as a secondary base station (this DC configuration is sometimes referred to as EN-DC). Although FIG. 4 illustrates an example in which the U-plane connection between the MME unit 204 and the gNB 224-2 is established via the eNB 223-1, the U-plane connection may be directly established between the MME unit 204 and the gNB 224-2.

FIG. 5 is a diagram illustrating a configuration of DC performed by gNBs connected to an NG core. In FIG. 5, solid lines each indicate U-plane connection, and broken lines each indicate C-plane connection. In FIG. 5, a gNB 224-1 serves as a master base station, and the gNB 224-2 serves as a secondary base station (this DC configuration is sometimes referred to as NR-DC). Although FIG. 5 illustrates an example in which the U-plane connection between the 5GC unit 214 and the gNB 224-2 is established via the gNB 224-1, the U-plane connection may be directly established between the 5GC unit 214 and the gNB 224-2.

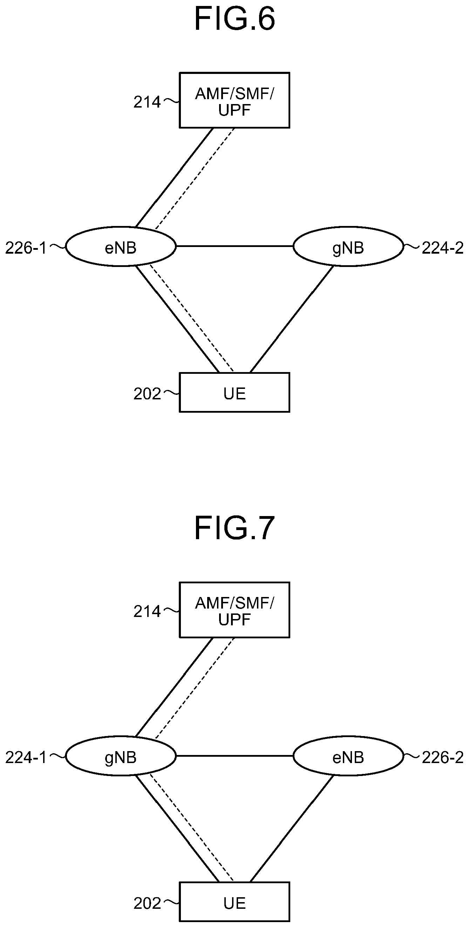

FIG. 6 is a diagram illustrating a configuration of DC performed by an eNB and the gNB connected to the NG core. In FIG. 6, solid lines each indicate U-plane connection, and broken lines each indicate C-plane connection. In FIG. 6, an eNB 226-1 serves as a master base station, and the gNB 224-2 serves as a secondary base station (this DC configuration is sometimes referred to as NG-EN-DC). Although FIG. 6 illustrates an example in which the U-plane connection between the 5GC unit 214 and the gNB 224-2 is established via the eNB 226-1, the U-plane connection may be directly established between the 5GC unit 214 and the gNB 224-2.

FIG. 7 is a diagram illustrating another configuration of DC performed by an eNB and the gNB connected to the NG core. In FIG. 7, solid lines each indicate U-plane connection, and broken lines each indicate C-plane connection. In FIG. 7, the gNB 224-1 serves as a master base station, and an eNB 226-2 serves as a secondary base station (this DC configuration is sometimes referred to as NE-DC). Although FIG. 7 illustrates an example in which the U-plane connection between the 5GC unit 214 and the eNB 226-2 is established via the gNB 224-1, the U-plane connection may be directly established between the 5GC unit 214 and the eNB 226-2.

In DC, two base stations to be connected may be referred to as a master node (MN) and a secondary node (SN). The MN has a control plane (C-Plane) connection with a core network (CN). The MN may be a master cell group (MCG). For example, the above may be a cell group configured by the MN. The SN may be a secondary cell group (SCG). For example, the above may be a cell group configured by the SN.

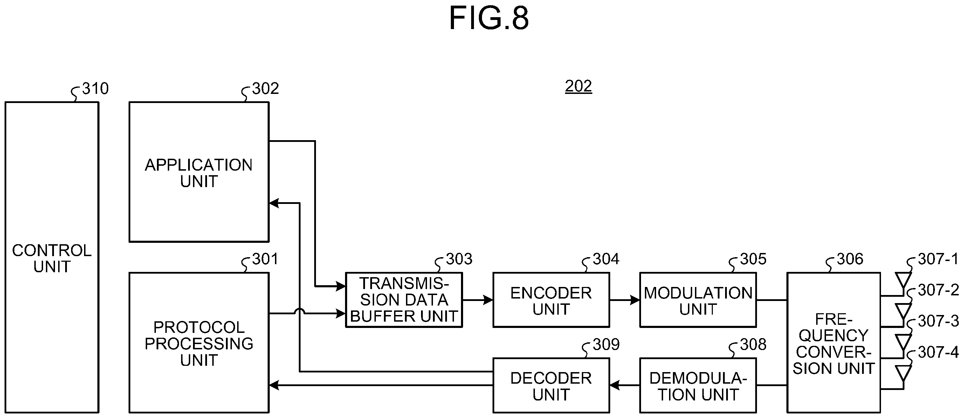

FIG. 8 is a block diagram illustrating a configuration of the user equipment 202 illustrated in FIG. 2. A transmission process performed by the user equipment 202 illustrated in FIG. 8 will be described. First, control data from a protocol processing unit 301 and user data from an application unit 302 are stored in a transmission data buffer unit 303. The data stored in the transmission data buffer unit 303 is passed to an encoder unit 304, and an encoding process such as error correction is performed thereon. There may be data output from the transmission data buffer unit 303 to a modulation unit 305 directly without being subjected to the encoding process. The data encoded by the encoder unit 304 is subjected to a modulation process by the modulation unit 305. The modulation unit 305 may perform precoding in MIMO. The modulated data is converted into a baseband signal, and then the baseband signal is output to a frequency conversion unit 306 to be converted into a radio transmission frequency. Thereafter, transmission signals are transmitted to the base station 203 from antennas 307-1 to 307-4. FIG. 8 exemplifies a case where the number of antennas is four, but the number of antennas is not limited to four.

The user equipment 202 executes a reception process as follows. A radio signal from the base station 203 is received by each of the antennas 307-1 to 307-4. The received signal is converted from a radio reception frequency into a baseband signal by the frequency conversion unit 306, and a demodulation process is performed thereon by a demodulation unit 308. The demodulation unit 308 may perform a weight calculation and a multiplication process. The demodulated data is passed to a decoder unit 309, and a decoding process such as error correction is performed thereon. Among pieces of the decoded data, the control data is passed to the protocol processing unit 301, and the user data is passed to the application unit 302. A series of processes of the user equipment 202 is controlled by a control unit 310. Therefore, although not illustrated in FIG. 8, the control unit 310 is connected to each of components 301 to 309. The control unit 310 is implemented by, for example, processing circuitry configured to include a processor and a memory. That is, the control unit 310 is implemented by the processor executing a program in which a series of processes of the user equipment 202 is described. The program in which a series of processes of the user equipment 202 is described is stored in the memory. Examples of the memory include a nonvolatile or volatile semiconductor memory such as a random access memory (RAM), a read only memory (ROM), or a flash memory. The control unit 310 may be implemented by dedicated processing circuitry such as a field programmable gate array (FPGA), an application specific integrated circuit (ASIC), or a digital signal processor (DSP). In FIG. 8, the number of antennas used by the user equipment 202 for transmission and the number of antennas used thereby for reception may be the same as or different from each other.

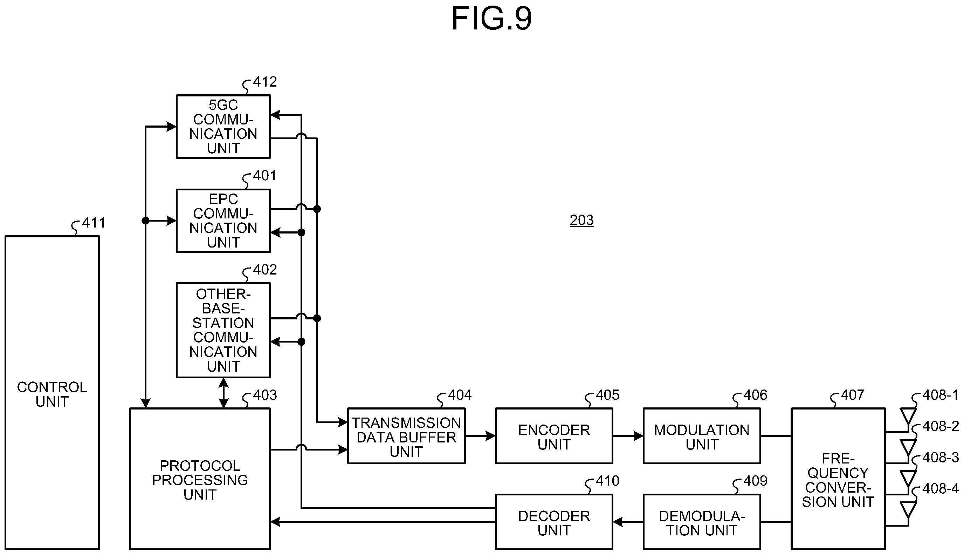

FIG. 9 is a block diagram illustrating a configuration of the base station 203 illustrated in FIG. 2. A transmission process performed by the base station 203 illustrated in FIG. 9 will be described. An EPC communication unit 401 transmits and receives data between the base station 203 and the EPC (such as the MME unit 204). A 5GC communication unit 412 transmits and receives data between the base station 203 and the 5GC (such as the 5GC unit 214). An other-base-station communication unit 402 transmits and receives data to and from other base stations. The EPC communication unit 401, the 5GC communication unit 412, and the other-base-station communication unit 402 each exchange information with a protocol processing unit 403. Control data from the protocol processing unit 403 and user data and control data from the EPC communication unit 401, the 5GC communication unit 412, and the other-base-station communication unit 402 are stored in a transmission data buffer unit 404.

The data stored in the transmission data buffer unit 404 is passed to an encoder unit 405, and an encoding process such as error correction is performed thereon. There may be data output from the transmission data buffer unit 404 to a modulation unit 406 directly without being subjected to the encoding process. The encoded data is subjected to a modulation process by the modulation unit 406. The modulation unit 406 may perform precoding in MIMO. The modulated data is converted into a baseband signal, and then the baseband signal is output to a frequency conversion unit 407 to be converted into a radio transmission frequency. Thereafter, transmission signals are transmitted from antennas 408-1 to 408-4 to one or a plurality of UEs 202. FIG. 9 exemplifies a case where the number of antennas is four, but the number of antennas is not limited to four.

The base station 203 executes a reception process as follows. Radio signals from one or a plurality of UEs 202 are received by the antennas 408. The received signals are each converted from a radio reception frequency into a baseband signal by the frequency conversion unit 407, and a demodulation process is performed thereon by a demodulation unit 409. The demodulated data is passed to a decoder unit 410, and a decoding process such as error correction is performed thereon. Among pieces of the decoded data, the control data is passed to the protocol processing unit 403, the 5GC communication unit 412, the EPC communication unit 401, or the other-base-station communication unit 402, and the user data is passed to the 5GC communication unit 412, the EPC communication unit 401, or the other-base-station communication unit 402. A series of processes of the base station 203 is controlled by a control unit 411. Therefore, although not illustrated in FIG. 9, the control unit 411 is connected to each of components 401 to 410, and 412. Similarly to the control unit 310 of the user equipment 202 described above, the control unit 411 is implemented by processing circuitry configured to include a processor and a memory, or dedicated processing circuitry such as an FPGA, an ASIC, or a DSP. In FIG. 9, the number of antennas used by the base station 203 for transmission and the number of antennas used thereby for reception may be the same as or different from each other.

FIG. 9 is a block diagram illustrating the configuration of the base station 203, but the base station 213 may have a configuration similar thereto. In addition, in FIGS. 8 and 9, the number of antennas of the user equipment 202 and the number of antennas of the base station 203 may be the same as or different from each other.

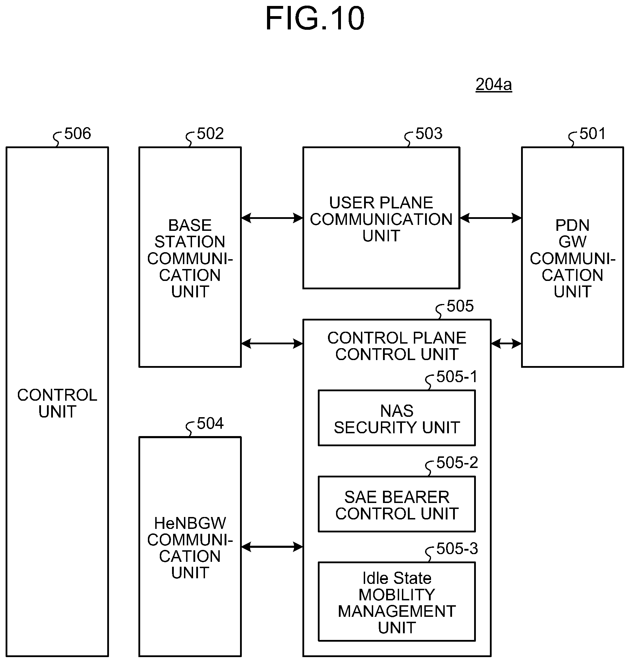

FIG. 10 is a block diagram illustrating a configuration of an MME. FIG. 10 illustrates a configuration of an MME 204a included in the MME unit 204 illustrated in FIG. 2 described above. A PDN GW communication unit 501 transmits and receives data between the MME 204a and a packet data network gate way (PDN GW). A base station communication unit 502 transmits and receives data between the MME 204a and the base station 203 via the S1 interface. In a case where data received from the PDN GW is user data, the user data is passed from the PDN GW communication unit 501 to the base station communication unit 502 via a user plane communication unit 503, and transmitted to one or a plurality of base stations 203. In a case where data received from the base station 203 is user data, the user data is passed from the base station communication unit 502 to the PDN GW communication unit 501 via the user plane communication unit 503, and transmitted to the PDN GW.

In a case where the data received from the PDN GW is control data, the control data is passed from the PDN GW communication unit 501 to a control plane control unit 505. In a case where the data received from the base station 203 is control data, the control data is passed from the base station communication unit 502 to the control plane control unit 505.

A HeNBGW communication unit 504 transmits and receives data between the MME 204a and a home-eNB gate way (HeNB GW). Control data received by the HeNBGW communication unit 504 from the HeNB GW is passed to the control plane control unit 505. The HeNBGW communication unit 504 transmits control data input from the control plane control unit 505 to the HeNB GW.

The control plane control unit 505 includes a NAS security unit 505-1, an SAE bearer control unit 505-2, an idle state mobility management unit 505-3, and the like, and performs overall processes on a control plane (hereinafter, sometimes referred to as a C-plane). The NAS security unit 505-1 provides security of a non-access stratum (NAS) message and the like. The SAE bearer control unit 505-2 performs management of system architecture evolution (SAE) bearers, and the like. The idle state mobility management unit 505-3 performs mobility management of an idle state (LTE-IDLE state or also simply referred to as idle), generation and control of a paging signal in the idle state, addition, deletion, update, and search of a tracking area of one or a plurality of UEs 202 under the management thereof, tracking area list management, and the like.

The MME 204a distributes paging signals to one or a plurality of base stations 203. In addition, the MME 204a performs mobility control in the idle state. The MME 204a manages a tracking area list when the user equipment 202 is in the idle state and an active state. The MME 204a starts a paging protocol by transmitting a paging message to a cell belonging to a tracking area in which the user equipment 202 is registered. The idle state mobility management unit 505-3 may manage CSG of the eNB 207 connected to the MME 204a, CSG IDs, and a whitelist.

A series of processes of the MME 204a is controlled by a control unit 506. Therefore, although not illustrated in FIG. 10, the control unit 506 is connected to each of components 501 to 505. Similarly to the control unit 310 of the user equipment 202 described above, the control unit 506 is implemented by processing circuitry configured to include a processor and a memory, or dedicated processing circuitry such as an FPGA, an ASIC, or a DSP.

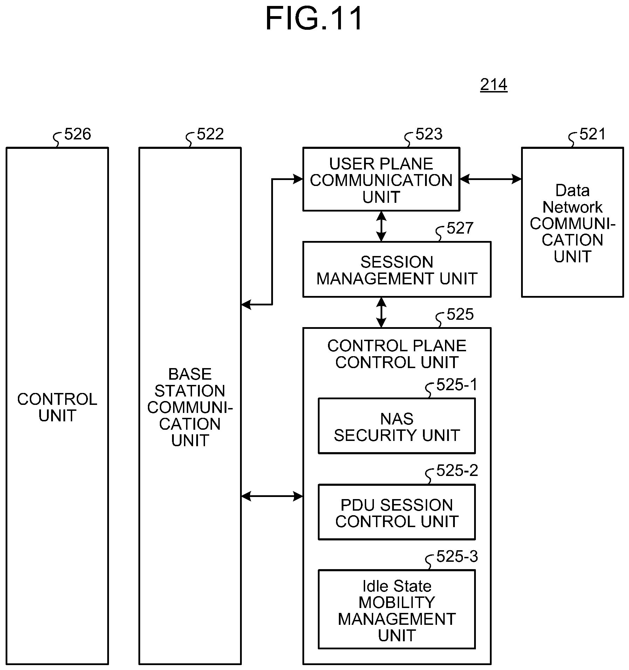

FIG. 11 is a block diagram illustrating a configuration of the 5GC unit. FIG. 11 illustrates a configuration of the 5GC unit 214 illustrated in FIG. 3 described above. FIG. 11 illustrates a case where a configuration of the AMF, a configuration of the SMF, and a configuration of the UPF are included in the 5GC unit 214 illustrated in FIG. 5. A data network communication unit 521 transmits and receives data between the 5GC unit 214 and a data network. A base station communication unit 522 transmits and receives data via the S1 interface between the 5GC unit 214 and the base station 203 and/or via the NG interface between the 5GC unit 214 and the base station 213. In a case where data received from the data network is user data, the user data is passed from the data network communication unit 521 to the base station communication unit 522 via a user plane communication unit 523, and transmitted to one or a plurality of base stations 203 and/or base stations 213. In a case where data received from the base station 203 and/or the base station 213 is user data, the user data is passed from the base station communication unit 522 to the data network communication unit 521 via the user plane communication unit 523, and transmitted to the data network.

In a case where data received from the data network is control data, the control data is passed from the data network communication unit 521 to a session management unit 527 via the user plane communication unit 523. The session management unit 527 passes the control data to a control plane control unit 525. In a case where data received from the base station 203 and/or the base station 213 is control data, the control data is passed from the base station communication unit 522 to the control plane control unit 525. The control plane control unit 525 passes the control data to the session management unit 527.

The control plane control unit 525 includes a NAS security unit 525-1, a PDU session control unit 525-2, an idle state mobility management unit 525-3, and the like, and performs overall processes on a control plane (hereinafter, sometimes referred to as a C-plane). The NAS security unit 525-1 provides security of a non-access stratum (NAS) message, and the like. The PDU session control unit 525-2 performs management of a PDU session between the user equipment 202 and the 5GC unit 214, and the like. The idle state mobility management unit 525-3 performs mobility management of an idle state (RRC-IDLE state or also simply referred to as idle), generation and control of a paging signal in the idle state, addition, deletion, update, and search of a tracking area of one or a plurality of UEs 202 under the management thereof, tracking area list management, and the like.

A series of processes of the 5GC unit 214 is controlled by a control unit 526. Therefore, although not illustrated in FIG. 11, the control unit 526 is connected to each of components 521 to 523, 525, and 527. Similarly to the control unit 310 of the user equipment 202 described above, the control unit 526 is implemented by processing circuitry configured to include a processor and a memory, or dedicated processing circuitry such as an FPGA, an ASIC, or a DSP.

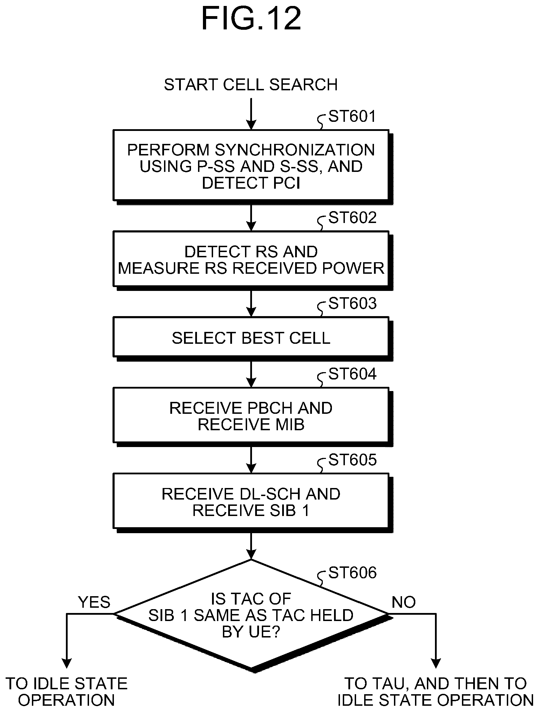

Next, an example of a cell search method in a communication system will be described. FIG. 12 is a flowchart schematically illustrating a cell search to an idle state operation performed by a communication terminal (UE) in the LTE communication system. When starting the cell search, in step ST601, the communication terminal synchronizes a slot timing and a frame timing using a primary synchronization signal (P-SS) and a secondary synchronization signal (S-SS) transmitted from a neighbor base station.

The P-SS and the S-SS are collectively referred to as a synchronization signal (SS). Synchronization codes that correspond one-to-one to PCIs are allocated to the synchronization signals (SSs), the PCIs being allocated on a per cell basis. As the number of PCIs, 504 different numbers are studied. The communication terminal performs synchronization using the 504 different numbers of PCIs and detects (specifies) a PCI of a synchronized cell.

Next, in step ST602, the communication terminal detects, for the synchronized cell, a cell-specific reference signal (CRS) which is a reference signal (RS) transmitted from the base station for each cell, and measures reference signal received power (RSRP). Codes that correspond one-to-one to the PCIs are used for reference signals (RSs). Separation from other cells can be performed by obtaining correlation using the codes. By deriving the code for the RS of the cell from the PCI specified in step ST601, it is possible to detect the RS and to measure the RS received power.

Next, in step ST603, the communication terminal selects a cell having the best RS reception quality, for example, a cell having the highest RS received power, that is, the best cell, from among the one or more cells detected up to step ST602.

Next, in step ST604, the communication terminal receives the PBCH of the best cell and obtains the BCCH which is broadcast information. A master information block (MIB) including cell configuration information is mapped to the BCCH on the PBCH. Accordingly, the MIB is obtained by receiving the PBCH to obtain the BCCH. Examples of the information of the MIB include a downlink (DL) system bandwidth (also referred to as transmission bandwidth configuration (dl-bandwidth)), the number of transmission antennas, and a system frame number (SFN).

Next, in step ST605, the communication terminal receives the DL-SCH of the cell on the basis of the cell configuration information of the MIB to obtain a system information block (SIB) 1 in the broadcast information BCCH. The SIB 1 includes information about access to the cell, information about cell selection, and scheduling information of other SIBs (SIB k; k is an integer equal to or greater than 2). The SIB 1 further includes a tracking area code (TAC).

Next, in step ST606, the communication terminal compares the TAC of the SIB 1 received in step ST605 with a TAC portion of a tracking area identity (TAI) in the tracking area list already held by the communication terminal. The tracking area list is also referred to as a TAI list. The TAI is identification information for identifying a tracking area, and includes a mobile country code (MCC), a mobile network code (MNC), and a tracking area code (TAC). The MCC is a country code. The MNC is a network code. The TAC is a code number of the tracking area.

If the TAC received in step ST605 is the same as the TAC included in the tracking area list as a result of the comparison in step ST606, the communication terminal enters an idle state operation in the cell. If the TAC received in step ST605 is not included in the tracking area list as a result of the comparison, the communication terminal requests, through the cell, a core network (EPC) including the MME or the like to change the tracking area in order to perform a tracking area update (TAU).

In the example illustrated in FIG. 12, from the cell search to the idle state operation in the LTE system are exemplified, but in the NR system, the best beam may be selected in addition to the best cell in step ST603. In addition, in the NR system, information on a beam, for example, a beam identifier may be acquired in step ST604. Furthermore, in the NR system, scheduling information of remaining minimum SI (RMSI) may be acquired in step ST604. In the NR system, the RMSI may be received in step ST605.

A device configuring a core network (hereinafter, sometimes referred to as a "core-network-side device") updates the tracking area list on the basis of an identification number (such as a UE-ID) of a communication terminal transmitted from the communication terminal together with a TAU request signal. The core-network-side device transmits the updated tracking area list to the communication terminal. The communication terminal rewrites (updates) the TAC list held by the communication terminal on the basis of the received tracking area list. Thereafter, the communication terminal enters an idle state operation in the cell.

The spread of smartphones and tablet terminal devices results in explosively increasing traffic in cellular radio communication, and there is a worldwide concern about a shortage of radio resources. In order to deal with the above to improve the spectral efficiency, downsizing of cells to advance spatial separation is under study.

In a conventional cell configuration, a cell configured by an eNB has a relatively wide range of coverage. A cell is conventionally configured to cover a certain area by such a relatively wide range of coverage of a plurality of cells configured by a plurality of eNBs.

In a case where cells are downsized, a cell configured by the eNB has a range of coverage narrower than the coverage of a cell configured by a conventional eNB. Accordingly, in order to cover a certain area similarly to conventional cases, a large number of eNBs configuring downsized cells as compared with the conventional eNBs are required.

In the following description, a cell having relatively large coverage such as the cell configured by a conventional eNB is referred to as a "macro cell", and an eNB configuring the macro cell is referred to as a "macro eNB". In addition, a cell having a relatively small coverage such as a downsized cell is referred to as a "small cell", and an eNB configuring the small cell is referred to as a "small eNB".

The macro eNB may be, for example, a "wide area base station" described in Non Patent Literature 7.

The small eNB may be, for example, a low power node, a local area node, a hotspot, or the like. In addition, the small eNB may be a pico eNB configuring a picocell, a femto eNB configuring a femtocell, a HeNB, a remote radio head (RRH), a remote radio unit (RRU), remote radio equipment (RRE), or a relay node (RN). Furthermore, the small eNB may be a "local area base station" or a "home base station" described in Non Patent Literature 7.

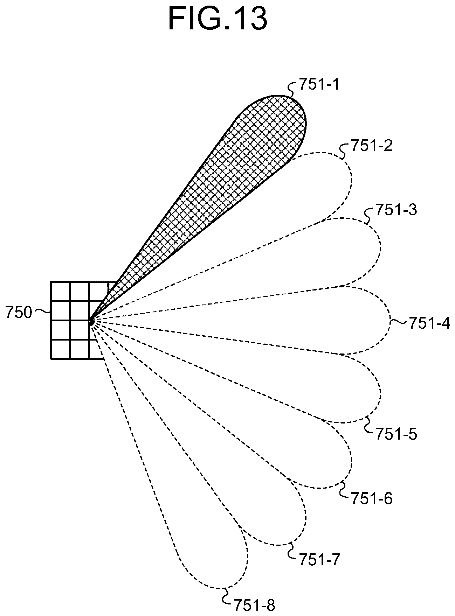

FIG. 13 illustrates an example of a configuration of a cell in NR. In the cell in NR, narrow beams are formed and transmitted in different directions. In the example illustrated in FIG. 13, a base station 750 performs transmission and reception to and from user equipment using a beam 751-1 at a certain time. The base station 750 performs transmission and reception to and from the user equipment using a beam 751-2 at another time. Thereafter, the base station 750 similarly performs transmission and reception to and from the user equipment using one or more of the beams 751-3 to 751-8. Thus, the base station 750 configures a cell with a wide range.

Although FIG. 13 illustrates an example in which the number of beams used by the base station 750 is eight, the number of beams may be different from eight. In addition, although the number of beams simultaneously used by the base station 750 is one in the example illustrated in FIG. 13, the number of beams may be two or more.

In 3GPP, sidelink (SL) is supported for device to device (D2D) communication and vehicle to vehicle (V2V) communication (see Non Patent Literatures 1 and 16). The SL is defined by a PC5 interface.

A physical channel (see Non Patent Literature 1) used for the SL will be described. A physical sidelink broadcast channel (PSBCH) carries information related to a system and synchronization, and is transmitted from a UE.

A physical sidelink discovery channel (PSDCH) carries a sidelink discovery message from a UE.

A physical sidelink control channel (PSCCH) carries control information from a UE for sidelink communication and V2X sidelink communication.

A physical sidelink shared channel (PSSCH) carries data from a UE for sidelink communication and V2X sidelink communication.

A physical sidelink feedback channel (PSFCH) carries HARQ feedback on the sidelink from a UE that has received PSSCH transmission to a UE that has transmitted the PSSCH.

A transport channel (see Non Patent Literature 1) used for the SL will be described. A sidelink broadcast channel (SL-BCH) has a predetermined transport format and is mapped to the PSBCH which is a physical channel.

A sidelink discovery channel (SL-DCH) has periodic broadcast transmission of a predetermined format having a fixed size. In addition, the SL-DCH supports both UE autonomous resource selection and resource allocation scheduled by eNB. In the UE autonomous resource selection, there is a collision risk, and when dedicated resources are allocated to a UE by an eNB, there is no collision. In addition, the SL-DCH supports HARQ combining but does not support HARQ feedback. The SL-DCH is mapped to the PSDCH which is a physical channel.

A sidelink shared channel (SL-SCH) supports broadcast transmission. The SL-SCH supports both UE autonomous resource selection and resource allocation scheduled by eNB. In the UE autonomous resource selection, there is a collision risk, and when dedicated resources are allocated to a UE by an eNB, there is no collision. In addition, the SL-SCH supports HARQ combining but does not support HARQ feedback. Furthermore, the SL-SCH supports dynamic link adaptation by changing transmission power, modulation, and coding. The SL-SCH is mapped to the PSSCH which is a physical channel.

A logical channel (see Non Patent Literature 1) used for the SL will be described. A sidelink broadcast control channel (SBCCH) is a sidelink channel for broadcasting sidelink system information from one UE to another UE. The SBCCH is mapped to the SL-BCH which is a transport channel.

A sidelink traffic channel (STCH) is a point-to-multipoint sidelink traffic channel for transmitting user information from one UE to another UE. The STCH is used only by a UE having a sidelink communication capability and a UE having a V2X sidelink communication capability. Point-to-point communication between two UEs having the sidelink communication capabilities is also realized by using the STCH. The STCH is mapped to the SL-SCH which is a transport channel.

A sidelink control channel (SCCH) is a sidelink control channel for transmitting control information from one UE to another UE. The SCCH is mapped to the SL-SCH which is a transport channel.

In 3GPP, support of V2X communication also in NR has been studied. The study of the V2X communication in NR has been progressed on the basis of the LTE system and the LTE-A system, but there are additions and changes to and from the LTE system and the LTE-A system in the following points.

In LTE, the SL communication uses broadcast only. In NR, as the SL communication, support of unicast and groupcast in addition to broadcast has been studied (see Non Patent Literature 22 (3GPP TS 23.287)).

Support of HARQ feedback (Ack/Nack), a CSI reporting, and the like in unicast communication and groupcast communication has been studied.

In order to support unicast and groupcast in addition to broadcast in the SL communication, support of PC5-S signaling has been studied (see Non Patent Literature 22 (3GPP TS 23.287)). For example, PC5-S signaling is implemented to establish a link for implementing SL, i.e., PC5 communication. The link is implemented in a V2X layer and is also referred to as a layer 2 link.

In addition, support of RRC signaling in the SL communication has been studied (see Non Patent Literature 22 (3GPP TS 23.287)). The RRC signaling in the SL communication is also referred to as PC5 RRC signaling. For example, it has been proposed to perform notifications, between UEs that perform PC5 communication, of capability of each UE, and of an AS layer configuration for performing the V2X communication using the PC5 communication.

In 5G, a dense network is formed with increasing frequency, and therefore, it is assumed that change of a base station and HO frequently occur. In such an NW, it is required to reduce communication interruption time and to improve the robustness and reliability of communication. Therefore, 3GPP has proposed a study of, for example, a combination of CHO and CPC, as a mobility enhancement technology and a DC enhancement technology (Non Patent Literature 28 RWS-210196 and Non Patent Literature 29 RWS-210078). However, there is no disclosure of a specific method of process in a case where the CHO and the CPC are combined.

Conventionally, CHO is applied to an MN, and CPC is applied to an SN. These are configured individually, and thus cannot operate simultaneously. Therefore, there is a problem in that a cooperative process in a case of combining the CHO and the CPC cannot be executed, for example, by simply using a conventional method for execution order, an evaluation method, and the like. In addition, regarding the specific method of process in the case where the CHO and the CPC are combined, there is no disclosure in standards and the like already established so far.

The first embodiment discloses a method for solving such a problem.

In order to solve the above problem, in the communication system according to the first embodiment, CPC is executed during CHO of an MN (hereinafter, sometimes referred to as "MN CHO"). The CPC may be executed during the execution of the MN CHO. "During the execution of the MN CHO" may be "during a condition evaluation of the MN CHO". The CPC may be executed during the condition evaluation of the MN CHO. Triggering of the CPC may be permitted during the condition evaluation of the MN CHO. In an MN CHO process, the triggering of the CPC may be permitted before an evaluation condition of any one of MNs to be candidates for an HO destination is met in the UE. In the first embodiment, the MN CHO in which the UE changes the MN of DC is a first connection destination change process, and the CPC in which the UE changes the SN of DC is a second connection destination change process.

The triggering of the MN CHO is preferably determined by an MN as an HO source (source MN (hereinafter, sometimes referred to as an S-MN)). The S-MN may determine the MN CHO for the UE by using a measurement report received from the UE. The triggering of the CPC during the condition evaluation of the MN CHO is preferably determined by the S-MN. The CPC for the UE may be determined by using the measurement report received from the UE. The UE may perform a measurement in the UE and a measurement report to the S-MN during the execution of the MN CHO and while being connected to the S-MN. Thus, the S-MN can determine the triggering of the CPC for the UE in a timely way.

A CPC triggering request during the condition evaluation of the MN CHO may be determined by an SN before change (source SN (hereinafter, sometimes referred to as an S-SN)). The S-SN may determine the CPC triggering request for the UE by using a measurement report received from the UE. The UE may perform a measurement in the UE and a measurement report to the S-SN during the execution of the MN CHO and while being connected to the S-SN. Thus, the S-SN can determine the CPC triggering request to the UE in a timely way.

The S-SN may request the S-MN to trigger the CPC during the condition evaluation of the MN CHO. A request message for the triggering preferably includes information about an SN after change (target SN (hereinafter, sometimes referred to as a T-SN)) to be a candidate for the CPC. The number of T-SNs to be candidates for the CPC may be one, or two or more.

Six examples of information about the target SN to be a candidate for the CPC will be disclosed.
(1) Information indicating that it is a request for the CPC.
(2) An identifier of the target SN to be a candidate.
(3) An SCG configuration of the target SN to be a candidate.
(4) A measurement result received from the UE.
(5) An identifier of the UE for which the CPC is triggered.
(6) A combination of (1) to (5).

For transmission of a CPC triggering request message from the S-SN to the S-MN, inter-base station signaling is preferably used. For example, Xn signaling is preferably used. For example, SN Change Required may be used. Alternatively, a new message may be provided. A new message for the request for the CPC may be provided.

Thus, the S-SN can make a request for the triggering of the CPC during the condition evaluation of the MN CHO. Consequently, flexibility of mobility of the UE can be further improved, and the robustness and reliability of communication can be improved.

The S-MN may determine the triggering of the CPC during the condition evaluation of the MN CHO by using the CPC triggering request message during the condition evaluation of the MN CHO received from the S-SN. The T-SNs to be candidates may be some or all of the T-SNs to be candidates received from the S-SN. Alternatively, the T-SNs to be candidates may be some or all of the T-SNs to be candidates selected by the S-MN and the T-SNs to be candidates received from the S-SN. Thus, it is possible to select a more suitable CPC candidate destination.

The S-MN transmits a CPC request message to the T-SNs to be candidates. Information indicating that it is a CPC request during evaluation of the MN CHO may be provided. The S-MN may include the information in the message and perform transmission thereof. Thus, the S-MN can request a CPC process of the T-SNs determined as candidates. The T-SNs that have received the messages can recognize that the request has been made to the T-SNs as candidates for the CPC during the evaluation of the MN CHO.

In a case where the CPC is triggered during the condition evaluation of the MN CHO, the MN CHO is preferentially processed. In other words, the CPC triggered during the condition evaluation of the MN CHO may be stopped during the execution of the MN CHO. Consequently, processes of the MN CHO and the CPC are clarified, and thus malfunction can be reduced.

However, in the case of this method, even though the CPC has been triggered, it is necessary to wait for the process of the CPC. Although a PC is required, a delay may occur, and thus communication quality with the S-SN may deteriorate. A method for solving such a problem will be disclosed.

In the case where the CPC is triggered during the condition evaluation of the MN CHO, the CPC is preferentially processed. In other words, the MN CHO is not executed during the execution of the CPC triggered during the condition evaluation of the MN CHO. The MN CHO may be stopped. By stopping the MN CHO, a process such as a condition evaluation by the UE can be stopped. Therefore, power consumption of the UE can be reduced. In addition, since the necessity of simultaneous execution of the CPC and the MN CHO is eliminated, complication of processes of the UE and RAN nodes (for example, the MN and the SN) can be prevented. It is possible to reduce malfunction in the UE and the RAN nodes.

In a case where the MN CHO is stopped, the MN CHO may be cancelled. The S-MN notifies an MN to be a candidate for an HO destination (a target MN (hereinafter, sometimes referred to as a T-MN)) of a message indicating cancel of the CHO. The T-MN may notify a configured SN of a message indicating cancel of an SN addition request. In a case where the T-MN configures a T-SN for a DC configuration, a notification of the message indicating the cancel of the SN addition request may be performed. The message may be newly provided. For example, an SN addition cancel message may be provided. As another method, an SN addition request message may be used to indicate the cancel of the SN addition request. Information indicating the cancel of the SN addition request is preferably included in the SN addition request message. Information indicating the cancel of the SN addition request may be included in a message type included in the SN addition request message. Thus, the T-SN can recognize that the SN addition has been canceled.

Information for specifying the MN CHO may be provided. The information may be an identifier. In a case where the S-MN determines the MN CHO, the information for specifying the MN CHO may be included in a CHO request message to be transmitted to the T-MN to be a candidate. An HO request message may be used as an MN CHO request message. The information for specifying the MN CHO may be included in an MN CHO cancel message to be transmitted from the S-MN to the T-MN to be a candidate. By making the information for specifying the MN CHO to be included in the MN CHO cancel message the same as the information for specifying the MN CHO included in the MN CHO request message, the T-MN can recognize which MN CHO has been canceled.

The information for specifying the MN CHO may be configured by the S-MN. The information may be a number not overlapping in the S-MN.

In a case where the S-MN determines to perform the MN CHO, the S-MN may include information for specifying the S-MN in the CHO request message to be transmitted to the T-MN to be a candidate. The information may be an identifier. The information for specifying the S-MN may be included in the MN CHO cancel message to be transmitted from the S-MN to the T-MN to be a candidate. The information for specifying the S-MN may be used in order for the T-MN to recognize which MN CHO has been cancelled. The information for specifying the MN CHO may be used in combination therewith. Thus, the T-MN can recognize which MN CHO configured by which S-MN has been canceled.

Information for specifying the SN addition request and/or information for specifying the T-MN may be provided. The information may be an identifier. The T-MN transmits the information to the T-SN to be configured. The T-MN may include the information in the SN addition request message and perform transmission thereof. In a case where the SN addition is cancelled, the T-MN preferably includes, in the SN addition cancel message, the information for specifying the SN addition request and/or the information for specifying the T-MN included in the SN addition request, and performs transmission thereof to the T-SN. Thus, the T-SN can recognize which SN addition request of which T-MN should be canceled.

In the MN CHO, a plurality of T-MNs may be employed as candidates. A plurality of T-MNs may configure the same T-SN. Even in such a case, the T-SN can recognize which SN addition request of which T-MN should be canceled by providing the information for specifying the SN addition request and/or the information for specifying the T-MN.

Another method for performing a process of the MN CHO in the case where the CPC is triggered during the condition evaluation of the MN CHO will be disclosed. In the case where the CPC is triggered during the condition evaluation of the MN CHO, the MN CHO may be continued. In the case where the CPC is triggered during the condition evaluation of the MN CHO, the condition evaluation of the MN CHO is preferably stopped. After the completion of the CPC, the condition evaluation of the MN CHO is preferably resumed. In the case where the CPC is triggered during the condition evaluation of the MN CHO, the UE stops the condition evaluation of the MN CHO. After the completion of the CPC, the UE resumes the condition evaluation of the MN CHO.

In the case where the CPC is triggered during the condition evaluation of the MN CHO, the condition evaluation of the MN CHO may be continued. In that case, the HO is not executed even in a case where a condition of the MN CHO is satisfied (hereinafter, sometimes referred to as a case where the condition is met). It is preferable not to execute the HO until the CPC is completed even in the case where the condition of the MN CHO is satisfied. In the case where the CPC is triggered during the condition evaluation of the MN CHO, the UE continues the condition evaluation of the MN CHO. In that case, in the UE, even in the case where the condition of the MN CHO is satisfied, an RA procedure is not executed on the T-MN that satisfies the condition of the MN CHO. Even in the case where the condition of the MN CHO is satisfied, the UE need not execute the RA procedure on the T-MN that satisfies the condition of the MN CHO until the CPC is completed.

By continuing the MN CHO, the MN CHO can be resumed immediately after the CPC. Since the HO of the MN can be executed in a timely way, the robustness and reliability of communication can be improved.

Thus, in the case where the CPC is triggered during the condition evaluation of the MN CHO, the CPC can be preferentially executed.

The S-MN that has determined the triggering of the CPC during the condition evaluation of the MN CHO requests the UE to execute the CPC. Information indicating the request may be transmitted by using an RRC message. The S-MN may use an RRC reconfiguration message for the transmission. The S-MN may include information about a process of the MN CHO in information indicating an execution request of the CPC and perform transmission thereof, or may transmit the information about a process of the MN CHO together with the information. For example, information indicating whether to stop or continue the MN CHO is preferable. For example, information indicating whether to continue the condition evaluation of the MN CHO is preferable. The S-MN can perform these configurations and notify the UE thereof. With the use of the configurations, the UE can execute the process of the MN CHO during the execution of the CPC.

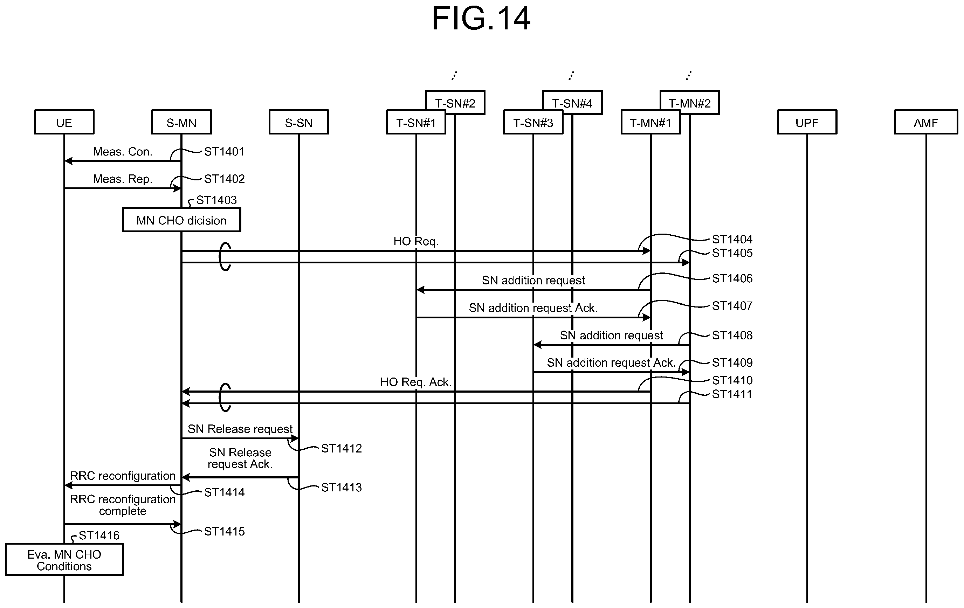

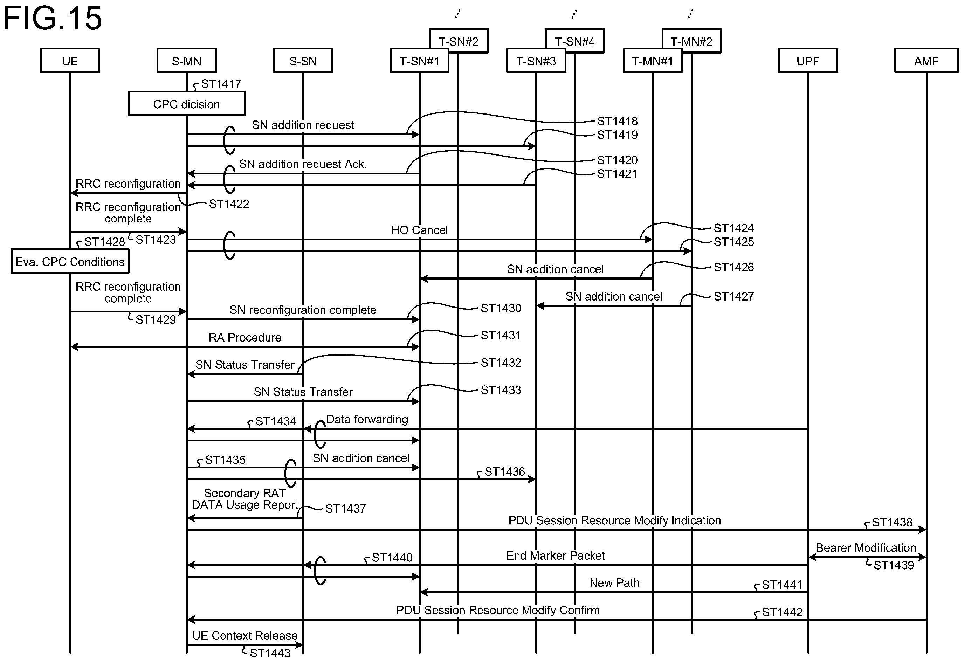

FIGS. 14 and 15 are each a diagram of a sequence illustrating an example of a method for executing the CPC during execution of the CHO of the MN in the first embodiment. FIG. 14 illustrates a first half of the sequence, and FIG. 15 illustrates a second half of the sequence. FIGS. 14 and 15 disclose a case where the CPC is triggered during the condition evaluation of the MN CHO. In step ST1401, the S-MN transmits a measurement configuration to the UE. Measurement Configuration (Meas. Con.) may be used for the transmission. The measurement configuration may include a measurement configuration for an MN CHO condition evaluation and/or a CPC condition evaluation. An identifier is preferably assigned to the measurement configuration. The UE performs a measurement in accordance with the measurement configuration, and transmits a result of the measurement to the S-MN in step ST1402. Measurement Report (Meas. Rep.) may be used for the transmission. For example, the UE may perform measurements on cells configured by the S-MN, the S-SN, and/or another base station, and transmit results of these measurements in step ST1402. For example, the UE may perform a measurement on a frequency of a cell configured by the MN and a measurement on a frequency of a cell configured by the SN, and transmit results of these measurements in step ST1402. In step ST1403, the S-MN determines to execute the MN CHO process on the UE. The S-MN may use the measurement results received from the UE in step S1402 in the determination. The S-MN determines one or a plurality of target PCells (hereinafter sometimes referred to as T-PCells) to be candidates for the MN CHO. One or a plurality of T-MNs to be candidates for the MN CHO may be determined. For example, an MN constituting a T-PCell to be a candidate for the MN CHO may be determined as the T-MN. In this example, T-MN #1 (T-PCell #1) and T-MN #2 (T-PCell #2) are each determined as the T-PCell to be a candidate for the MN CHO.

The S-MN transmits an MN CHO request message to T-MN #1 and T-MN #2 in steps ST1404 and ST1405, respectively. An HO request (HO Req.) message may be used as the message. The S-MN may include an identifier of the S-MN and configuration information of the S-MN in the message and perform transmission thereof. The S-MN may include an identifier of the S-SN and configuration information of the S-SN in the message and perform transmission thereof. The S-MN may include configuration information to be requested from the T-MN in the message and perform transmission thereof. The S-MN may include configuration information to be requested from the T-SN in the message and perform transmission thereof. The S-MN may include an identifier of the UE to be a target of the MN CHO in the message and perform transmission thereof. The S-MN may include some or all of the measurement results by the UE in the message and perform transmission thereof. Thus, T-MN #1 and T-MN #2 can recognize that the request has been made to T-MN #1 and T-MN #2 as candidates for the MN CHO.

T-MN #1 and T-MN #2 configure the MN CHO by using the received information. In addition, T-MN #1 and T-MN #2 determine an SN (T-SN) to be a target for DC. A PSCell to be a target for DC (hereinafter, sometimes referred to as a T-PSCell) may be determined. An SN constituting the PSCell to be a target may be determined as the T-SN. Here, T-SN #1 and T-SN #3 are determined. In steps ST1406 and ST1407, T-MN #1 as a candidate for the MN CHO performs an SN configuration request process for DC between T-SN #1 and T-MN #1. In step ST1406, T-MN #1 may use an SN addition request message. In step ST1407, T-SN #1 may use SN addition request Acknowledgement. In steps ST1408 and ST1409, T-MN #2 as a candidate for the MN CHO performs an SN configuration request process for DC between T-SN #3 and T-MN #2. In step ST1408, T-MN #2 may use an SN addition request message. In step ST1409, T-SN #3 may use SN addition request Acknowledgement.

T-MN #1 and T-MN #2 each transmit an MN CHO request acknowledgment message to the S-MN in steps ST1410 and ST1411, respectively. An HO request Acknowledge (HO Req. Ack.) message may be used for the MN CHO request acknowledgment message. The MN CHO request acknowledgment message preferably includes configuration information of the T-MN, an identifier and configuration information of the T-SN for DC. If the MN CHO cannot be configured, T-MN #1 and T-MN #2 each transmit an MN CHO request reject message to the S-MN. The message may include cause information.

The S-MN that has received the MN CHO request acknowledgment message from each of the T-MNs transmits a data transmission stop request message to the S-SN in step ST1412. An SN Release request message may be used for the message. The S-SN that has stopped data transmission to the UE transmits a data transmission stop request acknowledgment message to the S-MN in step ST1413. An SN Release request Acknowledgement may be used for the message. The S-SN that cannot stop data transmission to the UE transmits a data transmission stop request reject response message to the S-MN. In that case, the S-MN may stop executing the MN CHO.

In step ST1414, the S-MN transmits the MN CHO configuration to the UE as a target of the MN CHO. RRC signaling is preferably used. An RRC reconfiguration message may be used. Information about one or a plurality of T-MNs to be candidates and an evaluation condition for a T-MN are included in MN CHO configuration information and transmitted. In addition, information about the T-SNs configured for DC by the T-MNs may be included therein and transmitted. As the information about the T-MNs, identifiers of the T-MNs and configuration information of the T-MNs are preferably included. As the configuration information of the T-MNs, information configured by the RRC is preferably included. The same is true for the information about the T-SNs as for the information about the T-MNs. The evaluation condition for a T-MN is a condition under which the UE performs HO to the T-MN when the condition is met. That is, in a case where a T-MN to be evaluated satisfies the condition, the UE performs HO to the T-MN. For example, an event performed in the measurement configuration may be used. For example, a configuration may be performed with the identifier of the measurement configuration configured in step ST1401. Thus, the UE can recognize a T-MN to be a candidate for the MN CHO, the configuration thereof, and the evaluation condition. In step ST1415, the UE transmits an MN CHO configuration response message to the S-MN. An RRC reconfiguration complete message may be used for the message.

In step ST1416, the UE executes a condition evaluation of the MN CHO.

While the UE is executing the condition evaluation of the MN CHO, the S-MN determines triggering of the CPC for the UE in step ST1417. In the determination process, the measurement results of the UE may be used. That is, the S-MN may determine whether to trigger the CPC for the UE on the basis of the measurement results transmitted from the UE in step ST1402 described above or measurement results newly transmitted from the UE after step ST1402. The S-MN preferably determines whether to trigger the CPC, for example, on the basis of a result of a measurement performed on the S-SN and/or another base station. The UE may continue the measurement configured in step ST1401 described above and a measurement report similar to that in step ST1402 during the MN CHO. Thus, the S-MN can execute processes such as handover (HO) and PSCell change (PC) in a timely way by using the measurement report of the UE.

In step ST1417, after determining the triggering of the CPC, the S-MN determines one or a plurality of T-PSCells to be candidates for the CPC. One or a plurality of T-SNs to be candidates for the CPC may be determined. For example, an SN constituting a T-PSCell to be a candidate for the CPC may be determined as the T-SN. In this example, T-SN #1 (T-PCell #1) and T-SN #3 (T-PCell #3) are determined as candidates for the CPC.

The S-MN transmits a CPC request message to T-SN #1 and T-SN #3 in steps ST1418 and ST1419, respectively. An SN addition request message may be used as the message. The S-MN may include an identifier of the S-SN and configuration information of the S-SN in the message and perform transmission thereof. The S-MN may include configuration information to be requested from the T-SN in the message and perform transmission thereof. The S-MN may include an identifier of the UE to be a target of the CPC in the message and perform transmission thereof. Thus, T-SN #1 and T-SN #3 can recognize that the request has been made to T-SN #1 and T-SN #3 as candidates for the CPC.

T-SN #1 and T-SN #3 configure the CPC by using the received information, and if possible, each transmit a CPC request acknowledgment message to the S-MN in steps ST1420 and ST1421, respectively. An SN addition request Acknowledge message may be used for the CPC request acknowledgment message. The configuration information of T-SN #1 and that of T-SN #3 are preferably included in the CPC request acknowledgment messages. If the CPC cannot be configured, T-SN #1 and T-SN #3 each transmit a CPC request reject message to the S-MN. The message may include cause information.

The S-MN that has received the CPC request acknowledgment message from each T-SN configured as a candidate may skip the transmission of the data transmission stop request message to the S-SN in a case where the condition evaluation of the MN CHO is being executed. In the MN CHO process, the S-MN transmits the data transmission stop request message to the S-SN, and performs a data transmission stop process on the S-SN. The S-MN determines whether the condition evaluation of the MN CHO is being executed or whether the data transmission stop process has already been performed on the S-SN. The S-MN may skip the transmission of the data transmission stop request message to the S-SN in a case where the condition evaluation of the MN CHO is being executed or a case where the data transmission stop process has already been performed on the S-SN. A signaling load can be reduced.

In step ST1422, the S-MN transmits a CPC configuration to the UE as a target of the CPC. RRC signaling is preferably used. An RRC reconfiguration message may be used. The S-MN includes, in CPC configuration information to be transmitted in the CPC configuration, information about one or a plurality of T-SNs to be candidates and an evaluation condition for a T-SN, and performs transmission thereof. As the information about the T-SNs, identifiers of the T-SNs and configuration information of the T-SNs are preferably included. As the configuration information of the T-SNs, information configured by the RRC is preferably included. The evaluation condition for a T-SN is a condition under which the UE performs PC on the T-SN when the condition is met. For example, an event performed in the measurement configuration may be used. For example, a configuration may be performed with the identifier of the measurement configuration configured in step ST1401. Thus, the UE can recognize a T-SN to be a candidate for the CPC, the configuration thereof, and the evaluation condition.

In a case where the CPC is triggered during the MN CHO, the evaluation condition for a T-SN may be configured by the T-SN itself. The evaluation condition for the UE can be configured depending on the communication status of the T-SN. As another method, in the case where the CPC is triggered during the MN CHO, the evaluation condition for a T-SN may be configured by the S-MN. For example, the S-MN can configure the evaluation condition in consideration of the reception quality of the T-SN to be a candidate for the CPC in the UE.

Although not disclosed in the examples in FIGS. 14 and 15, in a case where the S-SN makes the CPC triggering request, the S-SN may configure the evaluation condition for a T-SN in a case where the CPC is triggered during the MN CHO. For example, the S-SN can configure the evaluation condition in consideration of the reception quality of the T-SN to be a candidate for the CPC in the UE.

The UE configures the CPC and transmits a CPC configuration complete message to the S-MN in step ST1423. An RRC reconfiguration complete message may be used. In step ST1422, the UE that has received the CPC configuration from the S-MN stops the condition evaluation of the MN CHO. The S-MN may include an MN CHO process configuration in the CPC configuration. The UE performs a process of the MN CHO by using the MN CHO process configuration received from the S-MN. Here, an example is illustrated in which the condition evaluation of the MN CHO is stopped.

In step ST1428, the UE executes evaluation of a CPC condition.

In order to cancel the MN CHO, the S-MN transmits an MN CHO request cancel message to T-MN #1 and T-MN #2 as candidates for the MN CHO in steps ST1424 and ST1425, respectively. An HO Cancel message may be used. T-MN #1 and T-MN #2 each transmit an SN configuration cancel message to T-SN #1 and T-SN #3 configured for DC in steps ST1426 and ST1427, respectively. An SN addition cancel message may be used. Thus, in a case where the CPC is executed during the condition evaluation of the MN CHO, the MN CHO can be cancelled. The timing of performing a cancel process of the MN CHO is not limited thereto. The timing of performing the cancel process is only required to be in or after step ST1417. The timing is only required to be after the triggering of the CPC during the MN CHO is determined by the S-MN.

For example, after determining the triggering of the CPC during the MN CHO in step ST1417, and before notifying T-SN #1 and T-SN #3 of the SN addition request in steps ST1418 and ST1419, respectively, the S-MN may transmit an MN CHO request cancel message to T-MN #1 and T-MN #2 as candidates for the MN CHO. T-MN #1 and T-MN #2 each transmit an SN configuration cancel message to T-SN #1 and T-SN #3 configured for DC, respectively. The S-MN preferably starts the process of the CPC after transmitting the MN CHO request cancel message to T-MN #1 and T-MN #2 as candidates for the MN CHO. The S-MN notifies T-SN #1 and T-SN #3 of the SN addition request in steps ST1418 and ST1419, respectively.

An SN configuration cancel response message may be provided. An SN addition cancel response message may be provided. The transmission of the message may be performed by inter-base station signaling, for example, Xn signaling. The T-SNs that have received the SN configuration cancel messages from the T-MNs transmit acknowledgment messages to the T-MNs in a case where the cancel process is performed. In a case where the cancel process is not performed, reject response messages are transmitted to the T-MNs. Thus, the T-MNs can recognize whether the T-SNs have canceled the SN configurations.

An MN CHO request cancel response message may be provided. An HO cancel response message may be used. The transmission of the message may be performed by inter-base station signaling, for example, Xn signaling. The T-MNs that have received the MN CHO request messages from the S-MN transmit acknowledgment messages to the S-MN in a case where the cancel process is performed. In a case where the cancel process is not performed, reject response messages are transmitted to the S-MN. The cancel process described above may include a cancel process of the SN configuration. Thus, the S-MN can recognize whether the T-MNs each have canceled the MN CHO request.

The S-MN may start the process of the CPC after receiving the MN CHO request cancel response messages from T-MN #1 and T-MN #2 as candidates for the MN CHO.

Thus, in a case where the triggering of the CPC during the MN CHO is determined by the S-MN, the MN CHO request can be canceled before starting the CPC process. It is possible to reduce malfunction, for example, in a case where an SN configured as a T-SN by the MN CHO is configured as a T-SN by the CPC.

In a case where the evaluation of the CPC condition is executed in step ST1428, and if any PSCell meets the condition, the UE transmits an RRC reconfiguration complete message to the S-MN in step ST1429. The message preferably includes information about the PSCell that meets the condition. For example, there is an identifier of the PSCell (an identifier of an SN constituting the PSCell). Here, a case is illustrated where SN #1 (PSCell #1) meets the condition. In step ST1430, the S-MN notifies SN #1 that the PC is executed on SN #1 by the CPC. An SN reconfiguaration complete message is preferably used for the notification. Thus, SN #1 can recognize that the CPC condition is met in the UE and the PC is executed.

In step ST1431, the UE executes the RA procedure on PSCell #1 that meets the CPC condition. Consequently, the UE can transmit and receive signals to and from PSCell #1.

In steps ST1432 to ST1443, a PSCell change process is performed among the S-MN, T-SN #1, the UPF, and the AMF. The process may be performed with not only the AMF but also the SMF. Data communication can be performed between the UE and each of the S-MN, T-ST #1, and the UPF. In addition, in order to perform cancel for the SN that does not meet the CPC condition, the S-MN transmits a CPC request cancel message to T-SN #1 and T-SN #3 in steps ST1435 and ST1436, respectively. An SN addition cancel message may be used for the message.

Thus, the CPC can be executed during the execution of the MN CHO.

In a case where the MN CHO is resumed after the completion of the CPC, the S-MN need not transmit the HO request cancel messages of steps ST1424 and ST1425 to the T-MNs to be candidates for the MN CHO. After the completion of the CPC, the S-MN may notify the T-MNs to be candidates for the MN CHO that an SN has been changed. "After the completion of the CPC" may be, for example, "after the execution of step ST1443". The S-MN transmits an identifier of an SN changed by the CPC and configuration information of the SN to the T-MNs to be candidates. The S-MN may transmit the identifier of the S-SN and configuration information of the SN to the T-MNs to be candidates.

For the notification from the S-MN to the T-MNs, inter-base station signaling, for example, Xn signaling may be used. A new message may be provided as Xn signaling. Alternatively, an HO request message may be used. An HO request message for performing a notification of the SN change is preferable. For example, the HO request message may include information indicating the notification of the SN change. For example, message type information included in the HO request message may include information indicating that the SN is changed. For example, cause information included in the HO request message may include information indicating that the SN is changed. Thus, the MN CHO can be executed subsequent to the completion of the CPC.

With the disclosure in the first embodiment, the CPC can be triggered during the condition evaluation of the MN CHO at a time of configuring DC. The CPC can be executed during the execution of the MN CHO at the time of configuring DC. In addition, in a case where the CPC is not triggered during the condition evaluation of the MN CHO at the time of configuring DC, the MN CHO is executed. By combining the MN CHO and the CPC as described above, one or a plurality of target nodes or target cells can be configured for both the MN and the SN. Therefore, it is possible to improve robustness and reliability in processes such as handover of MN (MN HO) and PSCell change (PC) at the time of configuring DC. For example, even in a case where a dense NW is configured, it is possible to improve the robustness and reliability of communication while improving a communication capacity.

### First Modification of First Embodiment.

A first modification of the first embodiment discloses another method for solving the problem described in the first embodiment.

In order to solve the problem described in the first embodiment, the communication system may execute the MN CHO during the execution of the CPC. "During the execution of the CPC" may be "during the condition evaluation of the CPC". The MN CHO may be executed during the condition evaluation of the CPC. Triggering of the MN CHO is permitted during the condition evaluation of the CPC. In the first modification, the CPC is the first connection destination change process, and the MN CHO is the second connection destination change process.

The triggering of the CPC is preferably determined by the S-MN. The S-MN may determine the CPC for the UE by using the measurement report received from the UE. The S-MN may determine one or a plurality of T-SNs to be candidates for the CPC.

The S-SN may determine to make a CPC triggering request. The S-SN may determine to make the CPC triggering request for the UE by using the measurement report received from the UE. The S-SN may determine one or a plurality of T-SNs to be candidates for the CPC. The S-SN may request the S-MN to trigger the CPC. The triggering request message preferably includes information about each T-SN to be a candidate for the CPC. It is preferable to appropriately apply, as the information about each T-SN to be a candidate for the CPC, the pieces of information of (1) to (6) disclosed in the first embodiment. It is preferable to appropriately apply, as a method for transmitting the CPC triggering request from the S-SN to the S-MN, the method for transmitting the CPC triggering request disclosed in the first embodiment. Thus, the S-SN can determine to make the CPC triggering request to the UE in a timely way.

The S-MN transmits a CPC request message to one or a plurality of T-SNs configured as candidates for the CPC. For the transmission of the CPC request message, inter-base station signaling, for example, Xn signaling may be used. A new message may be provided as the CPC request message. Alternatively, SN addition request may be used. Thus, each T-SN configured as a candidate for the CPC can recognize that the CPC is requested.

The triggering of the MN CHO during the condition evaluation of the CPC is preferably determined by the S-MN. The MN CHO for the UE may be determined by using the measurement report received from the UE. The UE may perform a measurement in the UE and a measurement report to the S-MN during the execution of the CPC and while being connected to the S-MN. Thus, the S-MN can determine the triggering of the MN CHO for the UE in a timely way.

In a case where the MN HO is triggered during the condition evaluation of the CPC, the CPC is preferentially processed. In other words, the MN CHO triggered during the condition evaluation of the CPC may be stopped during the execution of the CPC. Consequently, processes of the CPC and the MN CHO are clarified, and thus malfunction can be reduced.

However, in the case of this method, even though the MN CHO has been triggered, it is necessary to wait for the process of the MN CHO. Although the MN HO is required, a delay may occur, and thus communication quality with the S-MN may deteriorate. A method for solving such a problem will be disclosed.

In a case where the MN CHO is triggered during the condition evaluation of the CPC, the MN CHO is preferentially processed. In other words, the CPC is not executed during the execution of the MN CHO triggered during the condition evaluation of the CPC. The CPC may be stopped. By stopping the CPC, a process such as a condition evaluation by the UE can be stopped. Therefore, power consumption of the UE can be reduced. In addition, since the necessity of simultaneous execution of the MN CHO and the CPC is eliminated, it is possible to prevent complication of processes of the UE and the RAN nodes. It is possible to reduce malfunction in the UE and the RAN nodes.

In a case where the CPC is stopped, the CPC may be cancelled. The S-MN transmits a message indicating cancel of the CPC to each T-SN to be a candidate. The message may be newly provided. For example, an SN addition cancel message may be provided. Thus, the T-SN can recognize that the SN addition has been canceled. The T-SN that has received the message indicating cancel of the CPC releases the CPC configuration.

In a case where the S-MN receives the CPC triggering request from the S-SN, the S-MN preferably transmits a message indicating cancel of the CPC to the S-SN. For transmission of the message indicating cancel of the CPC from the S-MN to the S-SN, inter-base station signaling is preferably used. For example, Xn signaling is preferably used. A new message may be provided for cancel of the CPC request. Thus, the S-SN can recognize that the CPC has been canceled.

The S-SN may transmit a message indicating cancel of the CPC to one or a plurality of T-SNs configured as candidates for the CPC. The message may be newly provided. For example, an SN addition cancel message may be provided. Thus, each T-SN can recognize that the CPC has been canceled. Each T-SN that has received the message indicating cancel of the CPC preferably releases the CPC configuration.

Information for specifying the CPC may be provided. The information may be an identifier. The information for specifying the CPC may be included in the CPC request message to be transmitted from the S-MN to each T-SN to be a candidate. The information for specifying the CPC may be included in a CPC cancel message to be transmitted from the S-MN to each T-SN to be a candidate. By making the information for specifying the CPC to be included in the CPC cancel message the same as the information for specifying the CPC included in the CPC request message, the T-SN can recognize which CPC has been canceled.

The information for specifying the CPC may be configured by the S-MN. The information may be a number not overlapping in the S-MN.

The information for specifying the S-MN may be included in the CPC request message to be transmitted from the S-MN to each T-SN to be a candidate. The information may be an identifier. The information for specifying the S-MN may be included in the CPC cancel message to be transmitted from the S-MN to each T-SN to be a candidate. The information for identifying the S-MN may be used in order for the T-SN to recognize which CPC has been cancelled. The information for specifying the CPC may be used in combination therewith. Thus, the T-SN can recognize which CPC configured by which S-MN has been canceled.

Information for specifying the SN addition request and/or information for specifying the T-MN in the MN CHO may be provided. The information may be an identifier. It is preferable to appropriately apply, as a method for transmitting the information to the T-SN configured by the T-MN, the method disclosed in the first embodiment. In the MN CHO, a plurality of T-MNs may be employed as candidates. A plurality of T-MNs may configure the same T-SN. Even in such a case, the T-SN can recognize which SN addition request of which T-MN it is. In addition, it is preferable to separate the CPC cancel message and the SN addition request message by the MN CHO, which are received by the T-SN, by using the information in the MN CHO and the information for specifying the CPC and/or the S-MN. Consequently, even if the same T-SN is configured for the CPC and the MN CHO, the respective processes can be separated. For example, the T-SN can prevent the MN CHO from being canceled even if the CPC is canceled. The T-SN can execute the MN CHO.

Another method for performing a process of the CPC in the case where the MN CHO is triggered during the condition evaluation of the CPC will be disclosed. In the case where the MN CHO is triggered during the condition evaluation of the CPC, the CPC may be continued. In the case where the MN CHO is triggered during the condition evaluation of the CPC, the condition evaluation of the CPC is preferably stopped. After the completion of the MN CHO, the condition evaluation of the CPC is preferably resumed. In the case where the MN CHO is triggered during the condition evaluation of the CPC, the UE stops the condition evaluation of the CPC. After the completion of the MN CHO, the UE resumes the condition evaluation of the CPC.

In the case where the MN CHO is triggered during the condition evaluation of the CPC, the condition evaluation of the CPC may be continued. In that case, the CPC is not executed even in a case where the condition of the CPC is satisfied. It is preferable not to execute the CPC until the MN CHO is completed even in the case where the condition of the CPC is satisfied. In the case where the MN CHO is triggered during the condition evaluation of the CPC, the UE continues the condition evaluation of the CPC. In that case, in the UE, even in the case where the condition of the CPC is satisfied, the RA procedure is not executed on a T-SN that satisfies the condition of the CPC. Even in the case where the condition of the CPC is satisfied, the UE need not execute the RA procedure on the T-SN that satisfies the condition of the CPC until the MN CHO is completed.

By continuing the CPC, the CPC can be resumed immediately after the MN CHO. Since the CPC can be executed in a timely way, the robustness and reliability of communication can be improved.

Thus, in the case where the MN CHO is triggered during the condition evaluation of the CPC, the MN CHO can be preferentially executed.

The S-MN that has determined the triggering of the MN CHO during the condition evaluation of the CPC transmits an MN CHO request message to a T-MN to be a candidate. The T-MN that has received the MN CHO request message performs an SN configuration process between the T-SN and the T-MN. Regarding these processes, it is preferable to appropriately apply the method disclosed in the first embodiment.

The S-MN that has determined the triggering of the MN CHO during the condition evaluation of the CPC requests the UE to execute the MN CHO. Information indicating the request may be transmitted by using an RRC message. An RRC reconfiguration message may be used. Information about the process of the CPC may be included in information indicating an execution request of the MN CHO and transmitted, or may be transmitted together with the information. The information about the process of the CPC is preferably, for example, information indicating whether to stop or continue the CPC. For example, information indicating whether to continue the condition evaluation of the CPC is preferable. The S-MN can perform these configurations and notify the UE thereof. With the use of the configurations, the UE can execute the process of the CPC during the execution of the MN CHO.

After the completion of the MN CHO, a T-MN serving as an HO destination may reconfigure the CPC for the UE. The T-MN preferably configures the CPC. In the configuration, the T-MN configures one or a plurality of T-SNs to be candidates. It is preferable to appropriately apply the method disclosed above as a method for transmitting and receiving the CPC request messages to and from each T-SN configured by the T-MN. The T-MN transmits the CPC configuration to the UE as a target of the CPC. An RRC message may be used for the transmission of the CPC configuration. An RRC reconfiguration message may be used. Thus, it is possible to determine the configuration of the CPC for the UE depending on the communication status of the T-MN serving as the HO destination of the UE.

In a case where the T-MN serving as the HO destination configures the CPC for the UE, the necessity of the notification of the CPC configuration to the UE may be eliminated. The CPC configured by the S-MN may be continued. In a case where there is no notification of the CPC configuration from the T-MN serving as the HO destination, the UE may continue the CPC configured by the S-MN. Thus, a signaling load can be reduced.

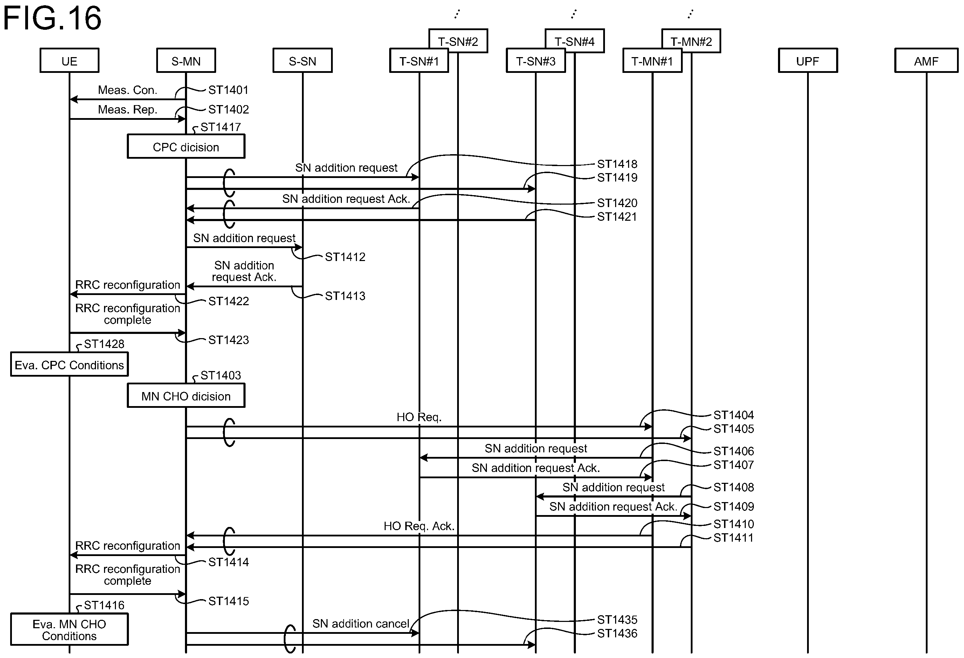

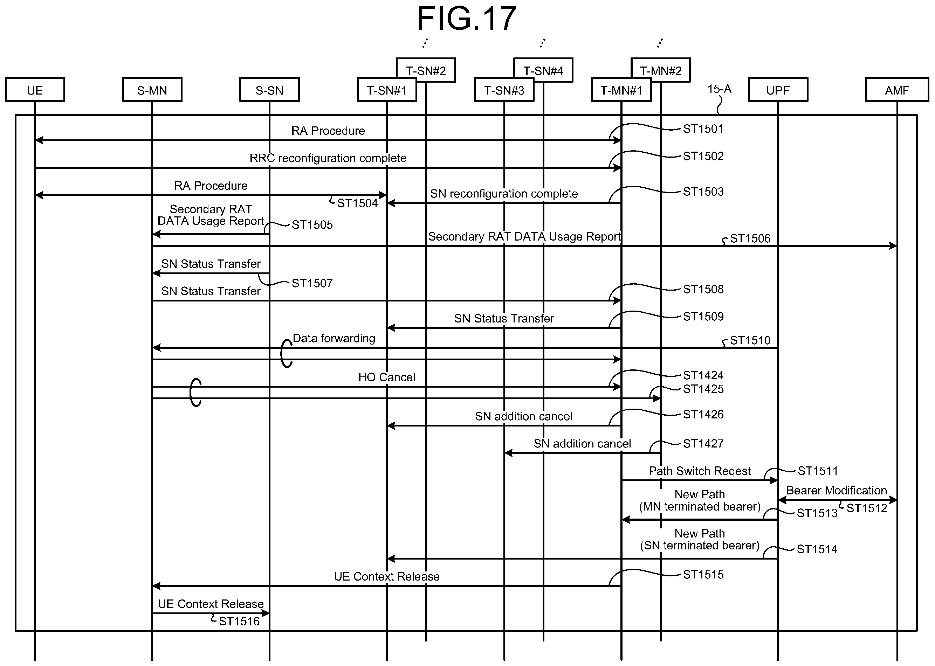

FIGS. 16 and 17 are each a diagram of a sequence illustrating an example of a method for executing the MN CHO during execution of the CPC in the first modification of the first embodiment. FIG. 16 illustrates a first half of the sequence, and FIG. 17 illustrates a second half of the sequence. The examples illustrated in FIGS. 16 and 17 disclose a case where the MN CHO is triggered during the condition evaluation of the CPC. In FIGS. 16 and 17, steps common to those in FIG. 14 or 15 are given the same step numbers as those therein, and a common description will be omitted.

In FIG. 16, in step ST1417 subsequent to step ST1402, the S-MN determines to execute the CPC process on the UE. The S-MN may use the measurement results received from the UE in step ST1402 in the determination. The S-MN determines one or a plurality of T-PSCells to be candidates for the CPC. In this example, T-SN #1 (T-PCell #1) and T-SN #3 (T-PCell #3) are determined as candidates for the CPC.

In steps ST1418 to ST1421, ST1412, ST1413, ST1422, and ST1423, a CPC configuration process is performed among the S-MN, the S-SN, T-SN #1, T-SN #3, and the UE. In step ST1428, the UE executes evaluation of a CPC condition.

While the UE is executing the condition evaluation of the CPC in step ST1428, the S-MN determines triggering of the MN CHO for the UE in step ST1403. The S-MN may use the measurement results received from the UE in the determination. The UE may continue the measurement configured in step ST1401 described above and a measurement report similar to that in step ST1402 during the CPC. Thus, the S-MN can execute processes such as HO and PC in a timely way by using the measurement report of the UE. In step ST1403, the S-MN determines one or a plurality of T-PCells to be candidates for the MN CHO. One or a plurality of T-MNs to be candidates for the MN CHO may be determined. For example, an MN constituting a T-PCell to be a candidate for the MN CHO may be determined as the T-MN. In this example, T-MN #1 (T-PCell #1) and T-MN #2 (T-PCell #2) are determined.

In steps ST1404 to ST1411, ST1414, and ST1415, an MN CHO configuration process is performed among the S-MN, T-MN #1, T-MN #2, T-SN #1, T-SN #3, and the UE.

In a case where the MN CHO is triggered during the CPC, the evaluation condition for a T-MN may be configured by the T-MN itself. The evaluation condition for the UE can be configured depending on the communication status of the T-MN. As another method, in the case where the MN CHO is triggered during the CPC, the evaluation condition for a T-MN may be configured by the S-MN. For example, the S-MN can configure the evaluation condition in consideration of the reception quality of a T-MN to be a candidate for the MN CHO in the UE.

In step ST1414, the UE that has received the MN CHO configuration from the S-MN stops the condition evaluation of the CPC. A CPC process configuration may be included in the MN CHO configuration. The UE performs a process of the CPC by using the CPC process configuration received from the S-MN. Here, an example is illustrated in which the condition evaluation of the CPC is stopped. In step ST1415, the UE transmits an MN CHO configuration response message to the S-MN. An RRC reconfiguration complete message may be used for the message.

The S-MN that has received in steps ST1410 and ST1411 the MN CHO request acknowledgment messages from the T-MNs configured as the candidates may skip the transmission of the data transmission stop request message to the S-SN in a case where the condition evaluation of the CPC is being executed. In the CPC process, the S-MN transmits the data transmission stop request message to the S-SN, and performs a data transmission stop process on the S-SN, so that there is no problem even if the transmission of the message is skipped during the condition evaluation of the CPC. The S-MN determines whether the condition evaluation of the CPC is being executed or whether the data transmission stop process has already been performed on the S-SN. The transmission of the data transmission stop request message to the S-SN may be skipped in the case where the condition evaluation of the CPC is being executed or where the data transmission stop process has already been performed on the S-SN. Thus, a signaling load can be reduced.

In order to cancel the CPC, the S-MN transmits a CPC request cancel message to T-SN #1 and T-SN #3 as candidates for the CPC in steps ST1435 and ST1436, respectively. An SN addition cancel message may be used for the message. Thus, in a case where the MN CHO is executed during the condition evaluation of the CPC, the CPC can be cancelled. A cancel process of the CPC is not limited thereto. The timing of performing the cancel process is only required to be in or after step ST1403. The timing is only required to be after the triggering of the MN CHO during the CPC is determined by the S-MN.

For example, after determining the triggering of the MN CHO during the CPC in step ST1403, and before notifying T-MN #1 and T-MN #2 of the MN CHO request message in steps ST1404 and ST1405, respectively, the S-MN may transmit the CPC request cancel message to T-SN #1 and T-SN #3 as candidates for the CPC. The S-MN preferably starts the process of the MN CHO after transmitting the CPC request cancel message to T-SN #1 and T-SN #3 as candidates for the CPC. The S-MN notifies T-MN #1 and T-MN #2 of the MN CHO request message in steps ST1404 and ST1405, respectively.

A CPC request cancel response message may be provided. An SN addition cancel response message may be used. The transmission of the message may be performed by inter-base station signaling, for example, Xn signaling. The T-SNs that have received the CPC request cancel messages from the S-MN each transmit an acknowledgment message to the S-MN in a case where the cancel process is performed. In a case where the cancel process is not performed, reject response messages are transmitted to the S-MN. Thus, the S-MN can recognize whether the T-SNs each have canceled the CPC request.

The S-MN may start the process of the MN CHO after receiving the CPC request cancel response messages from T-SN #1 and T-SN #3 as candidates for the CPC.

Thus, in a case where the triggering of the MN CHO during the CPC is determined by the S-MN, the CPC request can be canceled before starting the MN CHO process. It is possible to reduce malfunction, for example, in a case where an SN configured as a T-SN by the CPC is configured as a T-SN by the MN CHO.

In step ST1416, the UE executes the MN CHO condition evaluation.

In a case where the UE executes the MN CHO condition evaluation in step ST1416 and any of the PCells meets the condition, a process 15-A including step ST1501 and a series of subsequent steps is performed. In a case where any of the PCells meets the condition, the UE executes the RA procedure on the T-MN in step ST1501. Here, a case is illustrated where PCell #1 meets the condition. That is, the UE executes the RA procedure on T-MN #1 constituting PCell #1. In step ST1502, the UE transmits an RRC reconfiguration complete message to T-MN #1. In step ST1503, T-MN #1 notifies T-SN #1 that the SN configuration for DC is executed for the UE. An SN reconfiguration complete message may be used for the notification. Thus, T-SN #1 recognizes that a DC configuration is executed on the UE between the T-MN #1 and T-SN #1. In step ST1504, the UE execute the RA procedure on T-SN #1 configured for DC by T-MN #1. Consequently, the UE can perform transmission and reception to and from T-SN #1.

In steps ST1505 to ST1510 and ST1511 to ST1516, an inter-MN HO process involving a PSCell change process is performed among the S-MN, the S-SN, T-SN #1, T-MN #1, the UPF, and the AMF. The process may be performed with not only the AMF but also the SMF. In a case where T-SN #1 is the same as the S-SN, an inter-MN HO process not involving the PSCell change process is performed. Consequently, data communication can be performed between the UE and each of T-MN #1, T-SN #1, and the UPF.

In addition, in order to perform cancel for an MN that does not meet the condition in the MN CHO and the SN configured for DC by the MN, an MN CHO request cancel process is executed among the S-MN, T-MN #1, T-SN #1, T-MN #2, and T-SN #3 in steps ST1424 to ST1427.

Thus, the MN CHO can be executed during the execution of the CPC.

With the disclosure in the first modification of the first embodiment, the MN CHO can be triggered during the condition evaluation of the CPC at the time of configuring DC. The MN CHO can be executed during the execution of the CPC at the time of configuring DC. In addition, in a case where the MN CHO is not triggered during the condition evaluation of the CPC at the time of configuring DC, the CPC is executed. By combining the CPC and the MN CHO as described above, one or a plurality of target nodes or target cells can be configured for both the MN and the SN. Therefore, it is possible to improve robustness and reliability in processes such as PC and MN HO at the time of configuring DC. For example, even in a case where a dense NW is configured, it is possible to improve the robustness and reliability of communication while improving a communication capacity.

### Second Modification of First Embodiment.

A second modification of the first embodiment discloses another method for solving the problem described in the first embodiment.

In order to solve the problem described in the first embodiment, the communication system may configure both the MN CHO and the CPC. Both the MN CHO and the CPC may be executed. Both the MN CHO and the CPC may be triggered. Triggering of both the MN CHO and the CPC may be permitted.

An execution method in a case where both the MN CHO and the CPC are configured will be disclosed. The triggering of the MN CHO and the CPC is preferably determined by the S-MN. The S-MN may determine the MN CHO and the CPC for the UE by using the measurement report received from the UE. The S-MN may determine one or a plurality of T-MNs to be candidates for the MN CHO.

The S-MN transmits a message requesting the MN CHO and the CPC to each T-MN configured as a candidate for the MN CHO. Information indicating that the configurations of both the MN CHO and the CPC are requested may be provided. The information is preferably included in the message requesting the MN CHO and the CPC. Thus, each T-MN configured as a candidate for the MN CHO can recognize that the configurations of both the MN CHO and the CPC are requested. For the transmission of the message requesting the MN CHO and the CPC, inter-base station signaling is preferably used. A new message may be provided as the message requesting the MN CHO and the CPC. Alternatively, an HO request message may be used as the message requesting the MN CHO and the CPC. Thus, it is possible to avoid an increase in messages.

A T-SN to be a candidate for the CPC is configured by a T-MN to be a candidate for the MN CHO. The number of T-SNs to be candidates for the CPC is one, or two or more. The number of T-SNs to be candidates for the CPC configured by one T-MN may be one, or two or more. In a case where the number of T-SNs is two or more, the number of T-SNs to be configured in the CPC increases, and thus, the robustness and reliability of communication by the CPC are further improved.

The T-MN transmits a CPC request message to one or a plurality of T-SNs to be candidates thus configured. For the transmission of the CPC request message, inter-base station signaling, for example, Xn signaling may be used. A new message may be provided as the CPC request message. Alternatively, an SN addition request may be used as the CPC request message. Thus, each T-SN configured as a candidate for the CPC can recognize that the CPC is requested. Each T-SN that has received the CPC request configures the CPC and transmits a CPC request response message to the T-MN. For the transmission of the CPC request response message, inter-base station signaling may be used. A new message may be provided as the CPC request response message. Alternatively, SN addition request Acknowledge may be used as the CPC request response message. In a case where the CPC configuration is possible, the T-SN transmits a CPC request acknowledgment message. In a case where the CPC configuration is not possible, the T-SN may transmit a CPC request reject response message. The CPC request reject response message may include reject cause information. Thus, the T-MN can configure a T-SN for the CPC.

The T-MN that has configured both the MN CHO and the CPC transmits, to the S-MN, a response message to the request for both the MN CHO and the CPC. For the transmission of the response message, inter-base station signaling may be used. A new message may be provided as the response message. Alternatively, HO request aknowledge may be used as the response message. In a case where the configurations of both the MN CHO and the CPC are possible, the T-MN transmits an acknowledgment message. In a case where any of the configuration of the MN CHO and that of the CPC is not possible, the T-MN may transmit a reject response message. The message may include reject cause information. As another method, information indicating which configuration is possible may be provided. The information may be, for example, 2-bit information. Information indicating which configuration is possible may be included in the response message and transmitted. Thus, the S-MN can recognize whether each T-MN configured as a candidate can configure the MN CHO and/or the CPC. The S-MN preferably determines a T-MN and/or a T-SN that configures both the MN CHO and the CPC for the UE by using the response message from each T-MN configured as a candidate.

In a case of receiving a response message indicating that the configurations of both the MN CHO and the CPC are possible, the S-MN configures both the MN CHO and the CPC for the UE. The S-MN transmits, to the UE, information about the configurations of both the MN CHO and the CPC. RRC signaling is preferably used for the transmission. An RRC reconfiguration message may be used.

Six examples of information about the configurations of both the MN CHO and the CPC will be disclosed.
(1) Information indicating that it includes the configurations of both the MN CHO and the CPC.
(2) Information about a T-MN to be a candidate for the MN CHO.
(3) Information about the condition of the MN CHO.
(4) Information about a T-SN to be a candidate for the CPC.
(5) Information about the condition of the CPC.
(6) A combination of (1) to (5).
   (1) may be, for example, information about whether to configure both the MN CHO and the CPC. For example, one bit may be used for the information. As another example, it may be information indicating which of the MN CHO and the CPC is to be configured, for example. For example, two bits may be used for the information.
   (2) may be, for example, an identifier of the T-MN. For example, it may be an identifier of the PCell. For example, it may be configuration information of a cell group (CG). For example, it may be configuration information of an RLC bearer. For example, it may be DC termination configuration information.
   (3) may be, for example, measurement event configuration information used for the condition evaluation of the MN CHO. In a case where the measurement event is configured in the measurement configuration, it may be an identifier of the measurement. The condition may be configured for each T-MN. A condition suitable for each T-MN can be configured. As another example, a group may be provided for T-MNs. The condition may be configured for each group of T-MNs. For example, T-MNs in similar communication environments can be sorted into the same group, and T-MNs of the same group can be evaluated under the same condition. As another example, one condition may be configured for all T-MNs. An increase in a condition evaluation process by the UE can be avoided.
   (4) may be, for example, an identifier of the T-SN. For example, it may be an identifier of the PSCell. For example, it may be configuration information of a cell group (CG). For example, it may be configuration information of an RLC bearer. For example, it may be DC termination configuration information.
   (5) may be, for example, measurement event configuration information used for the condition evaluation of the CPC. In a case where the measurement event is configured in the measurement configuration, it may be an identifier of the measurement. The condition may be configured for each T-SN. A condition suitable for each T-SN can be configured. As another example, the condition may be configured for each T-SN configured by each T-MN. One condition is configured for each T-MN. The complexity of a condition process can be avoided. The condition may be configured for each group of T-SNs. For example, T-SNs in similar communication environments can be sorted into the same group, and T-SNs of the same group can be evaluated under the same condition. As another example, one condition may be configured for all T-SNs. An increase in a condition evaluation process by the UE can be avoided.

The information about a T-MN to be a candidate for the MN CHO and the information about a T-SN to be a candidate for the CPC may be associated with each other. For example, an identifier of a T-MN configuration to be a candidate for the MN CHO and an identifier of a T-SN configuration to be a candidate for the CPC are preferably associated with each other. For example, the above identifiers may be the same identifier. Thus, the UE can recognize which T-SN a T-MN has configured.

The UE that has received the configurations of both the MN CHO and the CPC from the S-MN performs a condition evaluation by using the condition of the MN CHO and the condition of the CPC included in the configurations. The UE may execute both the condition evaluation of the MN CHO and the condition evaluation of the CPC.

In a case where the condition has been first met by a T-MN in the condition evaluation by the UE, HO is performed to the T-MN. In that case, the UE starts the RA procedure on the T-MN. In a case where the condition has been first met by a T-SN in the condition evaluation by the UE, HO is performed to the T-SN. In that case, the UE starts the RA procedure on the T-SN.

In a case where both the condition evaluation of the MN CHO and the condition evaluation of the CPC are executed, a problem is a method for selecting a node (which may be a cell) in a configuration different from a configuration that has met the condition first out of the configuration of the MN CHO and that of the CPC. For example, in a case where the condition has been first met by a T-MN, the problem is how to select a target SN. On the other hand, in a case where the condition has been first met by a T-SN, the problem is how to select a target MN. Here, a method for solving such a problem will be disclosed.

Regarding the method for selecting a node in a configuration different from a configuration that has met the condition first out of the configurations of the MN CHO and the CPC, seven examples will be disclosed.
(1) A source node is selected.
(2) A node to be selected is configured in advance.
(3) A node with the best reception quality is selected.
(4) A condition is configured for a case where the condition is not met first.
(5) Nodes associated with each other are selected.
(6) The UE makes a determination.
(7) A combination of (1) to (6).

In the selection method of (1), the source node is selected as a target node. In other words, the source node is not changed. For example, in a case where the condition of the MN CHO is met first, the T-MN is determined first. The T-SN in that case is preferably the S-SN. That is, the S-SN is not changed. For example, in a case where the condition of the CPC is met first, the T-SN is determined first. In that case, the T-MN is preferably the S-MN. That is, the S-MN is not changed. Thus, it is possible to simplify a process of one that has not met the condition first.

In the selection method of (2), for example, a default node is preferably configured in advance. The S-MN may perform the configuration and notify the UE thereof. Alternatively, a T-MN to be a candidate may perform the configuration and notify the UE thereof via the S-MN. The notification may be performed by including the configuration in configuration information of the MN CHO and the CPC. For example, as a default node in the MN CHO, T-MN #1, which is one of one or more T-MNs, is employed. In addition, as a default node in the CPC, T-SN #1, which is one of one or more T-SNs, is employed. In a state where such configurations have been completed, for example, in a case where the condition of the MN CHO is met first, the T-MN is determined first. The T-SN in that case is preferably T-SN #1. In addition, for example, in a case where the condition of the CPC is met first, the T-SN is determined first. In that case, the T-MN is preferably T-MN #1. Thus, it is possible to simplify a process of one that has not met the condition first. In addition, since a node of one that has not met the condition first can be configured, configuration depending on the communication status at the time of configuration can be performed.

In the selection method of (3), for example, in the case where the condition of the MN CHO is met first, the T-MN is determined first. As the T-SN in that case, the UE selects a T-SN with the best reception quality among configured candidate T-SNs. For example, in a case where the condition of the CPC is met first, the T-SN is determined first. In that case, the UE preferably employs, as the T-MN, a T-MN with the best reception quality among configured candidate T-MNs. In the present disclosure, received power is also referred to as reception quality unless otherwise specified. The reception quality may be RSRP, reference signal received quality (RSRQ), signal to interference and noise ratio (SINR), a combination thereof, or the like. The above may be an index of the reception quality used by the UE for a measurement that has been configured. Thus, it is possible to select a node having the best reception quality at the time of executing the configuration that has met the condition first.

When the node having the best reception quality is selected, the source node may be excluded. In a case where the reception quality of the source node deteriorates, the MN CHO or the CPC is triggered in some cases. In such a case, when the source node is selected, the MN HO or the PC is triggered immediately. By excluding the source node, such a situation can be avoided.

In the selection method of (4), a condition is configured for the case where the condition is not met first, and the selection is performed by using the condition. The condition is preferably a configuration alternative to a condition configuration of the MN CHO and a condition configuration of the CPC. The S-MN may configure the condition and notify the UE thereof. Alternatively, a T-MN to be a candidate may perform the configuration and notify the UE thereof via the S-MN. The notification may be performed by including the configuration in configuration information of the MN CHO and the CPC. As the condition for the case where the condition is not met first, for example, a threshold of the reception quality may be configured to a lower value. The condition need not be reception quality. For example, the condition may be a propagation delay of an access link. The propagation delay may be timing advanced (TA). For example, the condition may be a propagation delay of a backhaul link. The propagation delay of the backhaul link may be a wired propagation delay or a wireless propagation delay. For example, the condition may be configured as a smallest propagation delay. For example, the condition may be configured as a propagation delay closest to that of the source node. A node in a radio wave propagation environment similar to that of the source node can be selected. Thus, it is possible to flexibly configure the condition for the case where the condition is not met first. A configuration can be performed depending on a radio wave propagation environment in which the UE is present.

The selection method of (5) can be applied, for example, to a case where a T-MN to be a candidate for the MN CHO and a T-SN to be a candidate for the CPC are associated with each other. For example, in a case where the condition of the MN CHO is met first, the T-MN is determined first. The T-SN in that case is preferably selected from the T-SNs configured by the determined T-MN. In a case where there are a plurality of the T-SNs, for example, the selection methods of (2) and (3) are preferably combined to select a T-SN corresponding thereto. In addition, for example, in a case where the condition of the CPC is met first, the T-SN is determined first. In that case, the T-MN is preferably a T-MN that has configured the determined T-SN. The method disclosed in (5) is not limited to the case where the T-MN configures the T-SN to be a candidate for the CPC. It is only required that the T-MN to be a candidate for the MN CHO and the T-SN to be a candidate for the CPC are associated with each other. For example, the T-MN to be a candidate for the MN CHO and the T-SN to be a candidate for the CPC may be associated with each other by the S-MN. The S-MN preferably notifies the UE of the association. Information indicating the association may be included in the configuration information of the MN CHO and the CPC to perform a notification thereof. Thus, it is possible to select one having a strong correlation between the T-MN and the S-MN.

In the selection method of (6), the UE determines a node to be selected. In that case, the necessity of the configuration of the selection method for the UE may be eliminated.

A particular method employed as the method for selecting a node in a configuration different from a configuration that has met the condition first out of the configurations of the MN CHO and the CPC may be statically determined in advance in a standard or the like. As another method, the S-MN may determine the selection method and notify the UE thereof. Information for configuring the selection method may be provided. The S-MN may transmit the information to the UE. RRC signaling may be used for the transmission of the information. For example, an RRC reconfiguration message may be used. For example, the information may be included in the configuration information of the MN CHO and the CPC and transmitted. As another method, the T-MN may determine the selection method and notify the UE thereof via the S-MN. Information for configuring the selection method may be provided. The T-MN may transmit the information to the UE via the S-MN. For the transmission of the information from the T-MN to the S-MN, inter-base station signaling, for example, Xn signaling may be used. RRC signaling may be used for the transmission of the information from the S-MN to the UE. For example, an RRC reconfiguration message may be used. For example, the information may be included in the configuration information of the MN CHO and the CPC and transmitted. Thus, the method for selecting a node in a configuration different from a configuration that has met the condition first out of the configurations of the MN CHO and the CPC can be configured for the UE. It is possible to perform a flexible configuration in consideration of a communication environment and a radio wave propagation environment of the UE and nodes related to the MN CHO and the CPC.

For example, in a case where the condition has been first met by the configuration of the MN CHO out of the configurations of the MN CHO and the CPC, (2) is employed as a T-SN selection method. In that case, one of the candidate T-SNs configured by the T-MN is preferably configured as a default node. For example, T-SN #1, which is one of one or more T-MNs, is configured as the default node. In a case where the condition has been first met by the configuration of the CPC, (5) is employed as a T-MN selection method. In that case, a T-MN that has configured the T-SN is preferable.

In such a case, in the case where the condition has been first met by the configuration of the MN CHO out of the configurations of the MN CHO and the CPC, regarding the MN, HO is executed to a T-MN that has met the condition, and the SN is changed to T-SN #1 in the DC configuration. That is, an inter-MN HO process involving the SN change is executed. If T-SN #1 is the same as the S-SN, inter-MN HO without involving the SN change is executed.

In the case where the condition has been first met by the configuration of the CPC out of the configurations of the MN CHO and the CPC, the SN change to a T-SN that has met the condition is executed, and regarding the MN, HO is executed to the T-MN that has configured the T-SN in the DC configuration. That is, an inter-MN HO process involving the SN change is executed. If the T-MN that has met the condition is the same as the S-MN, only the SN change is executed.

In a case where a plurality of T-MNs to be candidates for the MN CHO have configured the same SN as a candidate for the CPC, the selection method of (5) is unclear as to which T-MN may be employed as a target. In such a case, for example, a selection method obtained by combining (5) and (3) is preferably employed. In the case where the condition has been first met by the configuration of the CPC, as for the T-MN selection method, it is preferable to select a T-MN with the best reception quality among the plurality of T-MNs that have configured the T-SNs that have met the condition.

Thus, both the condition of the MN CHO and that of the CPC can be evaluated, and both the MN CHO and the CPC can be executed. Since HO or PC can be executed by using one or a plurality of T-MNs to be candidates and one or a plurality of T-SNs to be candidates, it is possible to further improve the robustness and reliability of communication while maintaining a high communication capacity.

In the above, the method has been disclosed in which the T-MN determines one or a plurality of T-SNs to be candidates for the CPC. Another method will be disclosed. As the another method, the S-MN may determine one or a plurality of T-SNs to be candidates for the CPC.

The S-SN may determine to make a CPC triggering request. It is preferable to appropriately apply, as a method for requesting the triggering of the CPC by the S-SN, the method for requesting the triggering of the CPC by the S-SN disclosed in the first modification of the first embodiment. The S-MN that has received the CPC triggering request message from the S-SN may determine the triggering of the MN CHO and the CPC by using the message.

The S-MN transmits a CPC request message to one or a plurality of T-SNs configured as candidates for the CPC. It is preferable to appropriately apply, as a method for transmitting the CPC request message to these T-SNs, the method for transmitting the CPC request message by the S-MN disclosed in the first modification of the first embodiment.

The S-MN makes a request to one or a plurality of T-MNs to be candidates for the MN CHO configuration. Each T-MN that has received the request need not configure the CPC for the SN. The T-MN need not configure the PC for the SN. As a method in which the S-MN makes a request to the one or the plurality of T-MNs to be candidates for the MN CHO configuration, the method in which the S-MN requests the MN CHO configuration disclosed in the first embodiment may be appropriately applied.

The S-MN configures, for the UE, both the MN CHO and the CPC. The S-MN transmits, to the UE, information about the configurations of both the MN CHO and the CPC. RRC signaling is preferably used for the transmission. An RRC reconfiguration message may be used. It is preferable to appropriately apply the information disclosed above as the information about the configurations of both the MN CHO and the CPC. Thus, both the MN CHO and the CPC can be configured for the UE.

The UE that has received the configurations of both the MN CHO and the CPC from the S-MN performs a condition evaluation by using the conditions of the MN CHO and the CPC included in the configurations. The UE may execute both the condition evaluation of the MN CHO and the condition evaluation of the CPC. It is preferable to appropriately apply the above method as the method for selecting a node in a configuration different from a configuration that has met the condition first out of the configurations of the MN CHO and the CPC.

For example, in the case where the condition has been first met by the configuration of the MN CHO out of the configurations of the MN CHO and the CPC, (1) is employed as the T-SN selection method. In other words, the S-SN is not changed. In the case where the condition has been first met by the configuration of the CPC, (1) is employed as the T-MN selection method. In other words, the T-SN is not changed.

In such a case, in the case where the condition has been first met by the configuration of the MN CHO out of the configurations of the MN CHO and the CPC, regarding the MN, HO is executed to a T-MN that has met the condition, but the SN is not changed in the DC configuration. That is, an inter-MN HO process not involving the SN change is executed.

In the case where the condition has been first met by the configuration of the CPC out of the configurations of the MN CHO and the CPC, the SN change to a T-SN that has met the condition is executed, but the MN is not changed in the DC configuration. That is, a process of the SN change only is executed.

Thus, an effect similar to that described above can be obtained.

In the above, the method has been disclosed in which the T-MN need not configure the CPC or the PC for the SN. As another method, the T-MN may configure the PC for the SN. The T-MN may configure one T-SN in DC.

The S-MN may transmit information about one or a plurality of T-SNs selected as candidates for the CPC to one or a plurality of T-MNs to be candidates for the MN CHO. It is preferable to appropriately apply, as the information about each T-SN to be a candidate for the CPC, the examples of the information disclosed in the first embodiment. Thus, each T-MN to be a candidate for the MN CHO can recognize each T-SN to be a candidate for the CPC configured by the S-MN.

In a case of configuring one T-SN in DC, the T-MN may select and configure the one T-SN from T-SNs configured as candidates for the CPC by the S-MN. The configuration may be performed by using the information about each T-SN to be a candidate for the CPC configured by the S-MN, the information having been received from the S-MN. Thus, the T-MN can select the T-SN in consideration of the T-SN selected as a candidate by the S-MN.

The T-MN transmits a PC request message to the configured T-SN. The PC request message may be transmitted by using inter-base station signaling. An SN addition request message may be used. The T-SN that has received the PC request message configures the PC. After configuring the PC, the T-SN transmits a PC request response message to the T-MN. The PC request response message may be transmitted by using inter-base station signaling. In a case where the PC configuration is possible, the T-SN transmits a PC request acknowledgment message as the PC request response message. An SN addition request Acknowledge message may be used for the message. In a case where the PC configuration is not possible, the T-SN transmits a PC request reject response message as the PC request response message. An SN addition request reject message may be used for the message. The T-MN that has received the PC request response message transmits an MN CHO request response message to the S-MN. The T-MN preferably includes information about the configured T-SN in the MN CHO request response message. Thus, the S-MN can recognize the T-SN configured by the T-MN.

The S-MN may add the T-SN configured by the T-MN as a candidate for the CPC. Thus, it is possible to consider the communication environment of the T-MN.

The S-MN configures, for the UE, both the MN CHO and the CPC. The S-MN transmits, to the UE, information about the configurations of both the MN CHO and the CPC. RRC signaling is preferably used for the transmission. An RRC reconfiguration message may be used. It is preferable to appropriately apply the information disclosed above as the information about the configurations of both the MN CHO and the CPC. Thus, both the MN CHO and the CPC can be configured for the UE.

The UE that has received the configurations of both the MN CHO and the CPC from the S-MN performs a condition evaluation by using the conditions of the MN CHO and the CPC included in the configurations. The UE may execute both the condition evaluation of the MN CHO and the condition evaluation of the CPC. It is preferable to appropriately apply the above method as the method for selecting a node in a configuration different from a configuration that has met the condition first out of the configurations of the MN CHO and the CPC.

For example, in the case where the condition has been first met by the configuration of the MN CHO out of the configurations of the MN CHO and the CPC, (5) is employed as the T-SN selection method. In other words, the T-SN configured by the T-MN that has met the condition is preferable. In the case where the condition has been first met by the configuration of the CPC, (1) is employed as the T-MN selection method. In other words, the S-MN is not changed.

In such a case, in the case where the condition has been first met by the configuration of the MN CHO out of the configurations of the MN CHO and the CPC, regarding the MN, HO is executed to a T-MN that has met the condition, and the SN is changed to the T-SN configured by the T-MN in the DC configuration. That is, the inter-MN HO process involving the SN change is executed. If the T-SN is the same as the S-SN, the inter-MN HO without involving the SN change is executed.

In the case where the condition has been first met by the configuration of the CPC out of the configurations of the MN CHO and the CPC, the SN change to a T-SN that has met the condition is executed, and the MN is not changed in the DC configuration. That is, a process of the SN change only is executed.

An example of a case will be disclosed where the S-MN add the T-SN configured by the T-MN as a candidate for the CPC. For example, in the case where the condition has been first met by the configuration of the MN CHO out of the configurations of the MN CHO and the CPC, (5) is employed as the T-SN selection method. In other words, the T-SN configured by the T-MN that has met the condition is preferable. In the case where the condition has been first met by the configuration of the CPC, a combination of (1) and (5) is preferably employed as the T-MN selection method. In a case where there is a T-MN associated with the T-SN that has met the condition of the CPC, the T-MN is preferably selected. In a case where there is no associated T-MN, it is preferable not to change the S-MN.

With such a method, an effect similar to that described above can be obtained.

Regarding the method for configuring one or a plurality of T-SNs to be candidates for the CPC, another method will be disclosed. The configuration of the one or the plurality of T-SNs to be candidates for the CPC is performed by the S-MN, and performed by one or a plurality of T-MNs to be candidates for the MN CHO. Regarding the configuration method, it is preferable that the method performed by the S-MN and the method performed by the T-MN disclosed above be appropriately combined and performed. When configuring both the MN CHO and the CPC for the UE, the S-MN preferably transmits configuration information of each T-SN configured by the S-MN and each T-SN configured by the T-MN. The UE preferably performs condition evaluations of all thereof. It is preferable to appropriately apply the above method as the method for selecting a node in a configuration different from a configuration that has met the condition first out of the configurations of the MN CHO and the CPC.

Thus, it is possible to configure more candidates for the CPC. An SN suitable for the condition can be selected from more SNs, and a change to a better SN can be performed. It is possible to further improve the robustness and reliability of communication while maintaining a higher communication capacity.

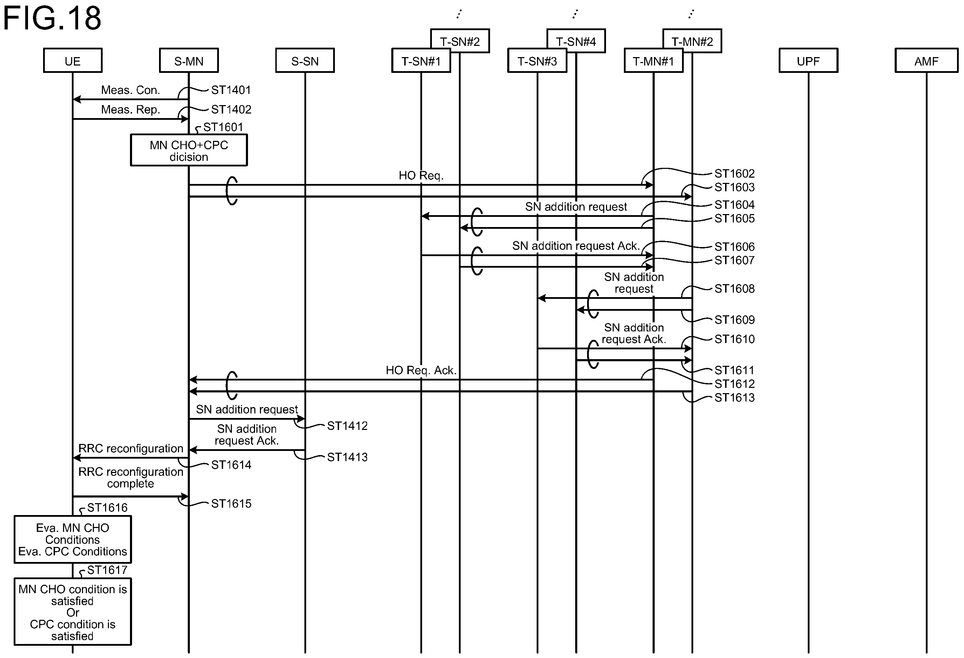

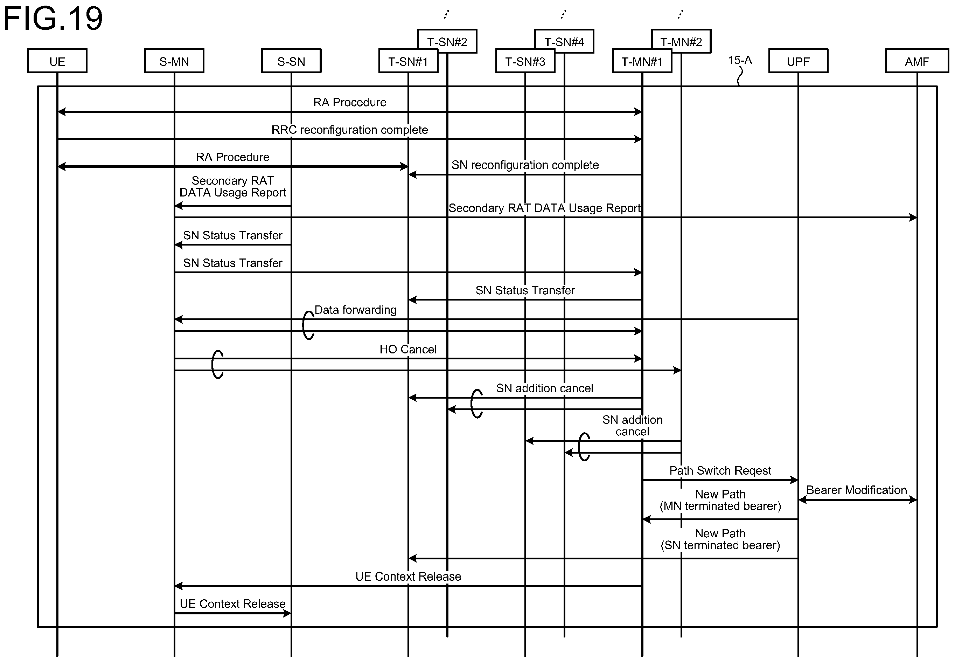

FIGS. 18 and 19 are each a diagram of a sequence illustrating an example of a method for executing both of the MN CHO and the CPC in the second modification of the first embodiment. FIG. 18 illustrates a first half of the sequence, and FIG. 19 illustrates a second half of the sequence. In FIGS. 18 and 19, steps common to those in FIG. 14, 15, 16, or 17 are given the same step numbers as those therein, and a common description will be omitted. The examples illustrated in FIGS. 18 and 19 disclose a case where T-MNs configured as candidates for the MN CHO configure candidates for the CPC.

In FIG. 18, in step ST1601 subsequent to step ST1402, the S-MN determines to execute the processes of both the MN CHO and the CPC on the UE. The S-MN may use the measurement results received from the UE in step ST1402 in the determination. The S-MN determines one or a plurality of T-PCells to be candidates for the MN CHO. In this example, T-MN #1 (T-PCell #1) and T-MN #2 (T-PCell #2) are determined.

The S-MN transmits a message of a request for the processes of both the MN CHO and the CPC (hereinafter, sometimes referred to as "MN CHO and CPC process request") to T-MN #1 and T-MN #2 in steps ST1602 and ST1603, respectively. An HO request message may be used for the message. The S-MN may include information indicating that it is the MN CHO and CPC process request in the message and perform transmission thereof. The S-MN may include an identifier of the S-MN and configuration information of the S-MN in the message and perform transmission thereof. The S-MN may include an identifier of the S-SN and configuration information of the S-SN in the message and perform transmission thereof. The S-MN may include configuration information to be requested from the T-MN in the message and perform transmission thereof. The S-MN may include configuration information to be requested from the T-SN in the message and perform transmission thereof. The S-MN may include an identifier of the UE to be a target of the MN CHO and CPC processes in the message and perform transmission thereof. The S-MN may include some or all of the measurement results by the UE in the message and perform transmission thereof. Thus, T-MN #1 and T-MN #2 can recognize that T-MN #1 and T-MN #2 are requested, as candidates for the MN CHO, to perform the MN CHO and CPC processes.

T-MN #1 and T-MN #2 that have received the MN CHO and CPC process requests configure the MN CHO by using the received information. In addition, T-MN #1 and T-MN #2 determine one or a plurality of PSCells to be candidates for the CPC. An SN may be determined. An SN constituting the PSCell to be a candidate may be determined as the T-SN. Here, T-MN #1 configures T-SN #1 and T-SN #2 as candidates for the CPC. T-MN #2 configures T-SN #3 and T-SN #4 as candidates for the CPC.

T-MN #1 transmits a CPC request message to T-SN #1 and T-SN #2 in steps ST1604 and ST1605, respectively. An SN addition request message may be used for the CPC request message. The CPC request message may include an identifier of the UE to be a target of the MN CHO and CPC processes, an identifier of the S-SN, configuration information of the S-SN, an identifier of the S-MN, configuration information of the S-MN, an identifier of T-MN #1, and configuration information of T-MN #1. Similarly, T-MN #2 transmits a CPC request message to T-SN #3 and T-SN #4 in steps ST1608 and ST1609, respectively.

T-SN #1 and T-SN #2 that have configured the CPC transmit, in steps ST1606 and ST1607, respectively, CPC request acknowledgment messages to T-MN #1. SN addition request Acknowledgement may be used for the CPC request acknowledgment message. It is preferable for T-SN #1 and T-SN #2 to respectively include configuration information of T-SN #1 and T-SN #2 in the message. Similarly, T-SN #3 and T-SN #4 that have configured the CPC transmit, in steps ST1610 and ST1611, respectively, CPC request acknowledgment messages to T-MN #2. In a case where a T-SN fails to configure the CPC, the T-SN may transmit a CPC request reject message to a corresponding T-MN. The message may include cause information.

T-MN #1 and T-MN #2 each transmit an MN CHO and CPC process request acknowledgment message to the S-MN in steps ST1612 and ST1613, respectively. An HO request Acknowledge message may be used for the MN CHO and CPC process request acknowledgment message. The MN CHO and CPC process request acknowledgment message preferably includes configuration information of the T-MN, an identifier and configuration information of each T-SN configured as a candidate for the CPC. In addition, in a case where the MN CHO and CPC processes cannot be configured, T-MN #1 and T-MN #2 each transmit an MN CHO and CPC process request reject message to the S-MN. The message may include cause information.

The S-MN that has received the MN CHO and CPC process request acknowledgment messages from the T-MNs performs a data transmission stop process between the S-SN and the S-MN in steps ST1412 and ST1413.

In step ST1614, the S-MN transmits the configurations of both the MN CHO and the CPC to the UE as a target of the MN CHO and CPC processes. RRC signaling is preferably used. An RRC reconfiguration message may be used. The configuration information of both the MN CHO and the CPC preferably includes information about one or a plurality of T-MNs to be candidates for the MN CHO, an evaluation condition for a T-MN, information about one or a plurality of T-SNs to be candidates for the CPC, an evaluation condition for a T-SN, and the method for selecting a node in a configuration different from a configuration that has met the condition first. As the information about the T-MNs, identifiers of the T-MNs and configuration information of the T-MNs are preferably included. As the configuration information of the T-MNs, information configured by the RRC is preferably included. The same is true for the information about the T-SNs as for the information about the T-MNs. The evaluation condition for a T-MN is a condition under which the UE performs HO to the T-MN when the condition is met. For example, an event performed in the measurement configuration may be used. For example, a configuration may be performed with the identifier of the measurement configuration configured in step ST1401. The evaluation condition for a T-SN is a condition under which the UE performs CP on the T-SN when the condition is met. For example, an event performed in the measurement configuration may be used. For example, a configuration may be performed with the identifier of the measurement configuration configured in step ST1401. Thus, the UE can recognize the configurations of each T-MN to be a candidate for the MN CHO and each T-SN to be a candidate for the CPC, and the evaluation conditions.

In step ST1616, the UE executes condition evaluations of both the MN CHO and the CPC. The UE executes the condition evaluations of both the MN CHO and the CPC in parallel.

In step ST1617, the UE determines that any of the conditions is met in the condition evaluations. The examples illustrated in FIGS. 18 and 19 disclose a case where the condition of T-MN #1 as a candidate for the MN CHO is met first. In addition, a method is disclosed in which the method for selecting a node in a configuration different from a configuration that has met the condition first is configured to be, for example, the combination of (5) and (3) described above. Here, for example, a method is disclosed in which a T-MN and a T-SN selected as a candidate for the CPC by the T-MN are configured in association with each other. In this example, T-MN #1 is associated with each of T-SN #1 and T-SN #2. T-MN #2 is associated with each of T-SN #3 and T-SN #4.

If the UE determines in step ST1617 that the condition of T-MN #1 is met, the UE selects a T-SN with the best reception quality among the T-SNs associated with T-MN #1. In this example, the T-SN with the best reception quality is T-SN #1. That is, in this example, the UE determines T-MN #1 as a target of the MN CHO and T-SN #1 as a target of the CPC.

After executing step ST1617, the UE performs the RA procedure on T-MN #1 and transmits an RRC reconfiguration complete message to T-MN #1. The message preferably includes information about T-SN #1 determined by the UE. Thus, T-MN #1 can recognize which T-SN has been determined as a target. T-MN #1 notifies T-SN #1 that the SN configuration for DC is executed as a target of the CPC on the UE. The UE executes the RA procedure on T-SN #1 determined as the target of the CPC. Thereafter, the inter-MN HO process involving the PSCell change process is performed among the S-MN, the S-SN, T-SN #1, T-MN #1, the UPF, and the AMF. The process may be performed with not only the AMF but also the SMF. Regarding these processes, it is preferable to apply the process 15-A disclosed in FIG. 17. Consequently, data communication can be performed between the UE and each of T-MN #1, T-SN #1, and the UPF.

Thus, both the MN CHO and the CPC can be executed.

With the disclosure in the second modification of the first embodiment, it is possible to perform the configurations and the condition evaluations of both the MN CHO and the CPC at the time of configuring DC. By performing the condition evaluations of both the MN CHO and the CPC, a target can be selected from a plurality of nodes or cells for both the MN and the SN. In addition, processes such as MN HO and PC are executed in a case where the conditions are met first for the MN CHO and the CPC, so that the processes can be executed at an early stage. Furthermore, since both processes such as the MN HO and the PC are executed, a period required for these processes can be shortened. Therefore, it is possible to further improve robustness and reliability in processes such as the PC and the MN HO at the time of configuring DC. For example, even in a case where a dense NW is configured, it is possible to improve the robustness and reliability of communication while improving a communication capacity.

In the above, the method for executing the process of one that has met the condition first in the condition evaluation by the UE has been disclosed. Another method will be disclosed. In the another method, the processes are executed after both conditions are met. In a case where a T-MN is determined by the condition evaluation of the MN CHO and a T-SN is determined by the condition evaluation of the CPC, the UE executes an HO process to the T-MN and a PC process to the T-SN.

The process of one that has met the condition first may be stopped until the other condition is met. In a case where the other condition is met, the process of one that has met the condition first is resumed, and both the processes are executed. Regarding a method for executing both the processes, it is preferable to appropriately combine the methods disclosed in the first embodiment to the second modification of the first embodiment. For example, it is preferable to select nodes determined under respective conditions in both the MN CHO and the CPC without using the method for selecting a node in a configuration different from a configuration that has met the condition first out of the configurations of the MN CHO and the CPC disclosed in the second modification of the first embodiment. Thus, the processes can be executed after both the T-MN and the T-SN are determined. The HO and PC processes can be executed on the T-MN and T-SN evaluated on the basis of the evaluation conditions and determined by the UE. There is no need to configure the method for performing a process of one which is different from one that has met the condition first in the method disclosed above, and it is possible to avoid complication of the processes.

As the process of one that has met the condition first, the condition evaluation by the UE may be performed until the other condition is met. The condition evaluation of the process of one that has met the condition first is continued until the other condition is met. In the case where the other condition is met, an MN or SN that has met the condition most recently at that point in time may be employed as a target. Thus, it is possible to determine, as a target, the MN or SN depending on the most recent radio wave propagation environment. The robustness and reliability of communication can be improved.

In a case where both the condition of the MN CHO and the condition of the CPC are met within a predetermined period, both the HO and the PC may be executed. HO involving the PC is preferably executed. The predetermined period may be configured by the S-MN. Alternatively, the T-MN may perform the configuration and notify the S-MN thereof. The S-MN preferably notifies the UE of the predetermined period. The predetermined period may be configured as a timer. The UE configures the timer that the S-MN has notified the UE of.

As a method for starting the timer, for example, the timer is started in a case where any of the condition of the MN CHO and that of the CPC is met first. In a case where the other condition is met within the timer, both the HO and the PC are executed. The timer may consequently be reset. The case where the other condition is met within the timer may be a case where both the conditions are met within the timer. Application may be performed, for example, to a method for continuing the condition evaluation of the process of one that has met the condition first. In a case where the timer has expired, any of the processes of the MN CHO and the CPC that has determined to start the timer is preferably executed. As another method in the case where the timer has expired, any of the processes of the MN CHO and the CPC that has determined to start the timer need not be executed. The timer is reset without executing the process. Thus, in a case where the conditions of both of the MN CHO and the CPC are met, the processes of both thereof can be executed.

The start of the timer is not limited to the above-described method, and the timer may be started, for example, in a case where the UE has received a timer setting value. Thus, timer management in the UE by the S-MN can be facilitated.

Thus, it is possible to flexibly configure a condition under which both the MN HO and the PC can be executed. The robustness and reliability of communication can be improved.

In a case where the conditions of the MN CHO and the CPC are met at the same time, or in a case where both the conditions are met within the predetermined period, both the HO and the PC may be executed.

Another method in the above condition evaluation by the UE will be disclosed. A condition for executing both of the MN CHO and the CPC is provided. The UE evaluates the condition for executing both thereof, and in a case where the condition is met, the UE determines, as a T-MN and a T-SN, the determined MN and SN. The UE executes HO and PC processes on the T-MN and the T-SN. The condition for executing both thereof may be configured by the S-MN. Alternatively, the T-MN may perform the configuration and notify the S-MN thereof. The S-MN preferably notifies the UE of the condition for executing both thereof. As an example of the condition for executing both thereof, a condition using reception qualities of both thereof is configured. For example, a function using both the reception quality of the MN and the reception quality of the SN may be provided. A threshold (referred to as a threshold Z) may be configured for an output value of the function. As a condition, for example, a case may be employed where the output value of the function is greater than the threshold Z. Both the MN CHO and the CPC are executed in a case where the MN and the SN that satisfy the condition are obtained. Thus, a condition using the reception qualities of both the MN and the SN can be configured. In communication using the UE and both the MN and the SN, for example, a predetermined communication capacity or a predetermined transmission rate can be satisfied.

A plurality of conditions may be combined. A condition for selecting the MN may be provided. For example, a case may be employed where communication quality is greater than a threshold A. A condition for selecting the SN may be provided. For example, a case may be employed where communication quality is greater than a threshold B. In a case where the threshold Z, the threshold A, and the threshold B are configured, and these thresholds are simultaneously satisfied, an MN and an SN that have satisfied these thresholds may be selected to execute both the MN CHO and the CPC. Thus, it is possible to select, as an MN for MN HO and an SN for PC, an MN and an SN that can obtain the minimum required communication quality.

It has been described in the present disclosure that the PC is executed between different SNs in the CPC process, but the PC may be executed in the same SN. The PSCell is changed in the same SN. In the present disclosure, it is preferable to replace different SNs with the same SN and to perform an appropriate application thereof. The CPC and the MN CHO can be executed in combination. A similar effect is obtained.

In a case where the PSCell is changed in the same SN in the CPC process, an SN modification process may be used. For example, an SN modification request message may be used for a CPC request message in the case where the PSCell is changed in the same SN. For example, an SN modification request response message may be used for a CPC request response message. In addition, an SN modification request cancel message and an SN modification request cancel response message may be newly provided as a message for canceling a CPC request and a response message thereof. These methods may be applied to the case where the PSCell is changed in the same SN. Since the necessity of use of the SN addition request message and the like is eliminated, it is possible to reduce malfunction in a case where the SN is not added, such as the case where the PSCell is changed in the same SN.

The method for executing both the MN CHO and the CPC in combination has been described in the present disclosure, but conditional PSCell addition (CPA) (see Non Patent Literature 28 RWS-210196) may be performed instead of the CPC. Both the MN CHO and the CPA may be executed in combination. As a method for executing both the MN CHO and the CPA in combination, it is preferable to appropriately apply the method described in the present disclosure. Instead of the PC process executed by the CPC, a PSCell addition (PA) process is executed by the CPA. In a case where both the MN CHO and the CPA are executed, an MN HO process involving the PA may be executed. Thus, in the MN HO by the MN CHO, the PA for DC can be configured by the CPA. It is possible to further improve robustness and reliability in the DC configuration at the time of the MN HO. For example, even in a case where a dense NW is configured, it is possible to improve the robustness and reliability of communication while improving a communication capacity.

### Second Embodiment.

In order to reduce communication interruption time at the time of HO in LTE, make-before-break (MBB) HO has been studied conventionally (see Non Patent Literature 1 TS 36.300). In MBB HO in LTE, a source PCell (S-PCell) includes MBB request information in an HO request message and performs transmission thereof to a target PCell (T-PCell). The MBB request information in LTE is MakeBeforeBreakReq information. In addition, the S-PCell includes MBB information in HO instruction information and performs transmission thereof to the UE. The MBB information in LTE is MakeBeforeBreak information. In the MBB HO in LTE, clear HO instruction information is transmitted from the S-PCell to the UE. The HO instruction information in LTE is mobilitycontrolinfo. The UE that has received the MBB information performs an MBB HO process. In the MBB HO, the UE continues transmission and reception to and from the S-PCell until the RA procedure with respect to a T-PSCell is started. The UE does not perform a MAC reset until the UE stops transmission and reception to and from the S-PCell. Thus, the communication interruption time between the UE during the HO and the PCell is reduced.

Such a reduction in the communication interruption time at the time of HO is required also in NR. However, in HO in NR, unlike that in LTE, clear HO instruction information is not transmitted from the S-PCell to the UE when the HO is executed. Therefore, there arises a problem that a method of the MBB HO in LTE cannot be applied to the HO in NR.

The second embodiment discloses a method for solving such a problem.

In order to solve such a problem, in NR, the S-PCell includes the MBB information in a transmission signal to the UE and performs transmission thereof to the UE when the HO is performed. When the S-PCell reconfigures the PCell for the UE, the S-PCell may perform transmission including the MBB information to the UE. RRC signaling may be used for the transmission of the MBB information. The transmission is preferably performed, for example, by including the MBB information in an RRC reconfiguration message. Thus, the MBB can be configured in a case where the PCell is reconfigured in NR.

As another method, the MBB information may be included in master cell group (MCG) information. As another method, the MBB information may be included in CG configuration information. For example, the MBB information is preferably included in CellGroupConfig information. Thus, the MBB can be configured as reconfiguration information of an MCG constituting the PCell.

As another method, the MBB information may be included in SPCell configuration information. For example, the MBB information is preferably included in spCellConfig information. The SPCell represents a PCell of an MN or a PSCell of an SN. Thus, the MBB can be configured as reconfiguration information of the PCell.

As another method, the MBB information may be included in SPCell configuration dedicated information. For example, the MBB information is preferably included in spCellConfigDedicated information. Thus, the MBB can be configured as reconfiguration information of the PCell dedicated to the UE.

As another method, the MBB information may be included in serving cell configuration information. For example, the MBB information is preferably included in ServingCellConfig information. Serving cell reconfiguration information is preferably used for the configuration of the MBB of the PCell. Thus, the MBB can be configured as the serving cell reconfiguration information.

As another method, the MBB information may be included in reconfiguration with synchronization information. For example, the MBB information is preferably included in reconfigurationWithSync information. For example, the MBB can be configured in reconfiguration of the PCell with synchronization.

With the method as disclosed in the second embodiment, the S-PCell can configure the MBB for the UE also in NR. It is possible to reduce, also in NR, communication interruption time in a case where the HO of the PCell is performed. It is possible to reduce, also in NR, communication interruption time in a case where the PCell is reconfigured.

In the above, the PCell in NR has been disclosed. The MBB may be applied not only to the PCell but also to the PSCell. The MBB may be configured when the PSCell change (PC) is performed. The MBB may be configured in reconfiguration of the PSCell.

In NR, when the S-PCell performs the PSCell change on the UE, the S-PCell performs transmission including the MBB information to the UE. The MBB information of the PSCell is MakeBeforeBreakSCG. When the S-PCell reconfigures the PSCell for the UE, the S-PCell may include the MBB information in a transmission signal to the UE and perform transmission thereof. RRC signaling may be used for the transmission of the MBB information. The transmission is preferably performed, for example, by including the MBB information in an RRC reconfiguration message. Thus, the MBB can be configured in a case where the PSCell is reconfigured in NR.

As another method, the MBB information may be included in secondary cell group (SCG) information. As another method, the MBB information may be included in CG configuration information. For example, the MBB information is preferably included in CellGroupConfig information. Thus, the MBB can be configured as reconfiguration information of an MCG constituting the PSCell.

As another method, the MBB information may be included in SPCell configuration information. For example, the MBB information is preferably included in spCellConfig information. The SPCell represents a PCell of an MN or a PSCell of an SN. Thus, the MBB can be configured as reconfiguration information of the PSCell.

As another method, the MBB information may be included in SPCell configuration dedicated information. For example, the MBB information is preferably included in spCellConfigDedicated information. Thus, the MBB can be configured as reconfiguration information of the PSCell dedicated to the UE.

As another method, the MBB information may be included in serving cell configuration information. For example, the MBB information is preferably included in ServingCellConfig information. Serving cell reconfiguration information is preferably used for the configuration of the MBB of the PSCell. Thus, the MBB can be configured as the serving cell reconfiguration information.

As another method, the MBB information may be included in reconfiguration with synchronization information. For example, the MBB information is preferably included in reconfigurationWithSync information. For example, the MBB can be configured in reconfiguration of the PSCell with synchronization.

With such a method, the S-PCell can configure the MBB for the UE also in NR. It is possible to reduce, also in NR, communication interruption time in a case where the PSCell change is performed. It is possible to reduce, also in NR, communication interruption time in a case where the PSCell is reconfigured.

### Third Embodiment.

In order to reduce communication interruption time at the time of HO in LTE, RACH-less HO has been studied conventionally (see Non Patent Literature 1 TS 36.300). In RACH-less HO in LTE, a T-MN includes RACH-less HO information, timing adjustment information, and UL grant information in an HO request response message and performs transmission thereof to an S-MN. The RACH-less HO information is rach-Skip information. The timing adjustment information is information about timing advanced (TA). The timing adjustment information may be timing advanced group (TAG). The timing adjustment information may be an identifier of the TAG. The UL grant information is UL scheduling information configured in advance. A UL scheduling period, a UL start subframe number, and UL grant information are included.

The S-MN includes the RACH-less HO information, the timing adjustment information, and the UL grant information in the HO instruction information and performs transmission thereof to the UE. In the RACH-less HO in LTE, clear HO instruction information is transmitted from the S-MN to the UE. However, in HO in NR, unlike that in LTE, clear HO instruction information is not transmitted from the S-MN to the UE when the HO is executed. Therefore, there arises a problem that a method of the RACH-less HO in LTE cannot be applied to the HO in NR.

In addition, in NR, unlike in LTE, synchronization to a cell is obtained by a synchronization signal block (SSB). UL grant timing, resources, and TA (TAG) differ depending on which SSB (beam) is selected. Therefore, there arises a problem that in NR in which the SSB is provided for each beam, the method of the RACH-less HO in LTE cannot be applied.

The third embodiment discloses a method for solving such a problem.

As a method for solving such a problem, in NR, the S-MN transmits information about the RACH-less HO to the UE. Four examples of the information about the RACH-less HO will be disclosed.
(1) RACH-less HO information.
(2) Timing adjustment information.
(3) UL grant information.
(4) A combination of (1) to (3).

It is preferable to appropriately apply, as a method in which the S-MN transmits the information about the RACH-less HO to the UE in NR, the method in which the S-MN transmits the MBB information to the UE in NR disclosed in the third embodiment. The MBB information is preferably replaced with the information about the RACH-less HO. Thus, the S-MN can configure the RACH-less HO for the UE also in NR.

In NR, the SSB and/or an RS is configured for each beam. The RS may be a CSI-RS.

The UE measures the reception quality of the beam by using the SSB and/or the RS. The UE transmits a beam measurement result to the S-MN. The beam measurement result to be transmitted may be a measurement result of a beam of a neighbor cell. The measurement result of the beam may be included in a measurement result of a cell and transmitted. The number of beams may be two or more, or may be one. The measurement result of the beam may include information about a reception time of the beam. The information about a reception time of the beam may be used, for example, for configuring the timing adjustment information in the T-MN. It is preferable to associate an identifier of the cell and a beam identifier with a measurement result of the beam and perform transmission thereof. The S-MN specifies a cell and a beam of an HO destination by using the measurement result received from the UE. A plurality of beams may be specified. Beams of a plurality of cells may be specified. The plurality of beams may be employed as candidates for the beam of the HO destination.

The S-MN transmits beam information to an MN (T-MN) constituting the specified cell of the HO destination. The beam information to be transmitted may be beam information of a plurality of beams. The beam identifier may be included in the beam information. Information about the SSB may be included. Information about the RS may be included. The beam information may include the measurement result of the beam received from the UE. The T-MN may employ a beam indicated by the received beam information as a candidate for the beam of the HO destination of the UE.

The T-MN configures the timing adjustment information and the UL grant information for the UE as an HO target in the beam indicated by the beam information received from the S-MN. The timing adjustment information and the UL grant information for the UE as an HO target in the plurality of beams indicated by the received beam information may be configured. Alternatively, the timing adjustment information and the UL grant information for the UE as an HO target in some of the plurality of beams indicated by the received beam information may be configured. Alternatively, the T-MN may configure the timing adjustment information and the UL grant information for the UE as an HO target in some or all of beams constituted by the T-MN.

The T-MN transmits, to the S-MN, information about beams. The information about beams is preferably information about beams configured by the T-MN for the UE as an HO target.

Six examples of information about beams will be disclosed.
(1) Beam information of configured beams.
(2) Timing adjustment information for each of the configured beams.
(3) UL grant information for each of the configured beams.
(4) Reception quality information for beam selection.
(5) Control resource set (CORESET) information.
(6) A combination of (1) to (5).

The UL grant information of (3) is preferably UL grant information for the UE as an HO target. The reception quality information of (4) may be a threshold of the reception quality. The reception quality information may be separately provided for the SSB and the RS. Reception quality information of the SSB and/or the RS may be included. For example, in a case where reception quality measured by using the SSB or the RS of a beam transmitted from the T-MN is less than the threshold of the reception quality when HO of the UE to the T-MN is performed, the beam need not be selected as an HO destination. The CORESET information of (5) is preferably CORESET information for the UE as an HO target. The CORESET information is information indicating a resource for transmitting the PDCCH to be received in the configured beam by the UE. The beam information of (1) may be associated with the pieces of information of (2) to (5). It is possible to recognize which beam the pieces of information of (2) to (5) are each about.

The T-MN may transmit, to the S-MN, the timing adjustment information and the UL grant information described above with the information about the RACH-less HO and the information about beams described above in combination. For example, in addition to the information about the RACH-less HO, the information about beams may be configured and transmitted. For example, instead of the information about the RACH-less HO, the information about beams may be configured and transmitted. Thus, the timing adjustment information and the UL grant information for the UE as an HO target can be transmitted to the S-MN also in a case where beams are formed. The information may be transmitted from the T-MN to the S-MN by using an interface between base stations. For example, Xn signaling may be used. The information may be included in an HO request Acknowledge message and transmitted.

The S-MN transmits the information about beams received from the T-MN to the UE as an HO target. The S-MN may transmit, to the UE, information obtained by combining the information about the RACH-less HO and the information about beams received from the T-MN. Thus, the timing adjustment information and the UL grant information for the UE as an HO target can be transmitted to the UE also in the case where beams are formed. It is preferable to appropriately apply, as a method for transmitting the information about beams from the S-MN to the UE, the above-described method for transmitting the information about the RACH-less HO.

The UE that has received the information about the RACH-less HO and the information about beams from the S-MN specifies a beam of a cell of an HO destination, skips the RA procedure in the specified beam by using the information, and obtains synchronization to the beam of the cell. Thus, the UE can be synchronized with the beam of the HO destination and can start communication.

The method for performing a process of the RACH-less HO in NR disclosed above may be appropriately applied to a PCell change process, an SN change process, and a PSCell change process. For example, the T-SN configures the information about beams for the UE as a target of the SN change (which may be PSCell change) process, and transmits the information to the S-MN. The S-MN transmits the information to the UE as a target of the SN change (which may be PSCell change) process. The UE that has received the information specifies a beam of an HO destination of the T-SN (which may be T-PSCell), skips the RA procedure in the specified beam by using the information, and obtains synchronization to the beam of the cell. Thus, the UE can be synchronized with the beam of an SN change destination and can start communication.

For example, the above may be applied to an inter-MN HO process involving the SN change at the time of configuring DC. The T-MN configures information about beams of the T-MN for the UE as a target of the inter-MN HO process involving the SN change. In addition, the T-SN for DC configured by the T-MN may configure information about beams of the T-SN for the UE as a target of the inter-MN HO process. The T-SN transmits, to the T-MN, the information about beams of the T-SN thus configured. The T-MN transmits, to the UE as a target of the inter-MN HO process involving the SN change via the S-MN, the information about beams of the T-MN and/or the T-SN thus configured. The UE that has received the information specifies the beams of the T-MN and the T-SN, skips the RA procedure in the specified beams by using the information, and obtains synchronization to the beams of the cells. Thus, the UE can be synchronized with the beam of the HO destination and the beam of the SN change destination, and can start communication in the DC configuration.

The method for performing a process of the RACH-less HO in NR disclosed above may be appropriately applied to the CHO and the CPC. It is preferable to appropriately apply the above-disclosed method for performing a process of the RACH-less HO in NR in the MN HO process, the PCell change process, the SN change process, and the PSCell change process. The information about beams is preferably information about beams for each of one or a plurality of T-MNs and one or a plurality of T-SNs configured as candidates.

With the method as disclosed in the third embodiment, it is possible to perform, also in NR in which the SSB and the RS are configured for each beam, the MN HO process in which the RA procedure is skipped, the PCell change process, the SN change process, and the PSCell change process. In addition, the CHO and CPC processes in which the RA procedure is skipped can also be performed. Therefore, it is possible to reduce, also in NR, communication interruption time in a mobility process including such a DC configuration.

### Fourth Embodiment.

Dual connectivity in which a UE communicates with two base stations is conventionally supported in order to improve a communication capacity and improve the robustness and reliability of communication. However, in order to further improve and increase the communication capacity and improve the robustness and reliability of communication with respect to operation in a dense NW in 5G, a study of a multi-connectivity technology for performing communication with three or more base stations has been proposed (Non Patent Literature 30 RWS-210183). However, there is no disclosure of a specific method of process of multi-connectivity.

There arises a problem that for example, in a case where the UE performs data transmission to three or more base stations, if the UE does not know a method of process such as to which base station the data should be transmitted, a base station cannot determine whether the base station should perform scheduling for the UE, and the UE cannot perform actual communication with a plurality of base stations.

In order to solve such a problem, the fourth embodiment discloses a UL transmission method in a case where the UE communicates with three or more base stations.

In order to solve the above problem, the UE transmits a buffer status report (BSR) to one or a plurality of base stations. A method for transmitting the BSR will be disclosed. In order to determine to which base station the BSR is transmitted, a plurality of thresholds are provided for the amount of data. The above amount of data is preferably the amount of data stored in a buffer in the UE. The above amount of data may be the amount of data stored in a buffer of the PDCP. For example, the plurality of thresholds are denoted by Th #1, Th #2, ..., Th #n (n is an integer greater than 1). The UE preferably determines a base station to which the BSR is transmitted depending on whether the amount of data stored in the buffer is greater than or less than these thresholds (which may be greater than or equal to, or less than or equal to these thresholds).

A default base station may be configured in order to determine to which base station the BSR is transmitted. A plurality of default base stations may be configured. For example, in a case where the amount of data is less than a threshold, the BSR is transmitted to a default base station, and in a case where the amount of data is greater than or equal to the threshold, the BSR is transmitted to all base stations.

A plurality of thresholds and a plurality of default base stations may be configured in combination. For example, in a case where the amount of data is less than Th #1, the UE transmits the BSR to default base station #1. For example, in a case where the amount of data is greater than or equal to Th #1 and less than Th #2, the BSR is transmitted to default base station #2. For example, in a case where the amount of data is greater than or equal to Th #2, the BSR is transmitted to all base stations.

As another example, in a case where the amount of data is less than Th #1, for example, the UE transmits the BSR to default base station #1. For example, in a case where the amount of data is greater than or equal to Th #1 and less than Th #2, the BSR is transmitted to default base station #1 and default base station #2. For example, in a case where the amount of data is greater than or equal to Th #2 and less than Th #3, the BSR is transmitted to default base station #1, default base station #2, and default base station #3. For example, in a case where the amount of data is greater than or equal to Th #3, the BSR is transmitted to all base stations.

As another example, a threshold may be configured for each default base station, for example. Th #1, Th #2, and Th #3 are configured for default base station #1, default base station #2, and default base station #3, respectively. The UE transmits the BSR to default base station #1 in a case where the amount of data is greater than Th #1, transmits the BSR to default base station #2 in a case where the amount of data is greater than Th #2, and transmits the BSR to default base station #3 in a case where the amount of data is greater than Th #3. In addition, for example, in a case where Th #1, Th #2, and Th #3 are configured to satisfy Th #1<Th #2<Th #3, and the amount of data is greater than Th #2 and less than or equal to Th #3, the UE transmits the BSR to default base stations #1 and #2. Any of the thresholds to be configured may be configured to 0. It is possible to configure a base station to which the BSR is transmitted in a case where the amount of data is small.

As another example in which the plurality of thresholds and the plurality of default base stations are configured in combination, a default base station to which the BSR is not transmitted may be configured depending on the thresholds. For example, in a case where the amount of data is less than or equal to Th #1, the BSR is not transmitted to default base station #1. For example, in a case where the amount of data is less than or equal to Th #2, the BSR is not transmitted to default base station #2. For example, in a case where Th #1 and Th #2 are configured to satisfy Th #1>Th #2, the BSR is transmitted to all base stations in a case where the amount of data is greater than Th #1, the BSR is transmitted to the base stations except default base station #1 in a case where the amount of data is less than or equal to Th #1 and greater than Th #2, and the BSR is transmitted to the base stations except default base stations #1 and #2 in a case where the amount of data is less than or equal to Th #2.

The configurations of the plurality of thresholds and the plurality of default base stations may be appropriately combined. As described above, the plurality of thresholds and the plurality of default base stations can be configured in combination, and thereby the flexibility of BSR transmission control can be improved.

The base station that has received the BSR from the UE performs UL scheduling for the UE.

Thus, even in communication with three or more base stations, the UE can determine to which base station to transmit the BSR. The base station that has received the BSR from the UE can perform UL scheduling for the UE by using the BSR. Therefore, UL communication can be performed between the UE and three or more base stations.

As another method, a base station group including one or a plurality of base stations may be provided. Thresholds (for example, Th #1 and Th #2) and base station groups may be configured in combination. For example, in a case where the above-described amount of data is less than Th #1, the BSR is transmitted to base station group #1. In a case where the amount of data is greater than or equal to Th #1 and less than Th #2, the BSR is transmitted to base station group #2. In a case where the amount of data is greater than or equal to Th #2, the BSR is transmitted to all base stations. Thus, BSR transmission to a plurality of base stations can be performed depending on the amount of data. Therefore, data transmission to a plurality of base stations can be performed depending on the amount of data.

A base station group may include some base stations of another base station group. Thus, the amount of data and a base station to which the BSR is transmitted can be flexibly configured.

A base station transmits, to the UE, the configuration information disclosed above, for example, information on a plurality of default base stations and/or information on a plurality of thresholds. The information on a plurality of default base stations and the information on a plurality of thresholds may be transmitted in association with each other. The base station that transmits the configuration information to the UE may be employed as a master base station. RRC signaling may be used for the transmission of these pieces of information. Thus, the UE can transmit the BSR depending on the configuration. The base station can change the configuration of the BSR for the UE depending on the communication status of each base station. Therefore, it is possible to perform UL scheduling depending on the communication status of each base station.

The base station may transmit a plurality of pieces of configuration information to the UE in advance. The base station may transmit, to the UE, information indicating which configuration to use among the plurality of pieces of configuration information. For example, the plurality of pieces of configuration information may be transmitted by RRC signaling, and information indicating which configuration to use may be transmitted by MAC signaling or L1/L2 signaling. Since the transmission is performed by MAC signaling or L1/L2 signaling, the configuration information can be changed at an early stage. Even in a case where the communication status rapidly fluctuates, the changed configuration information can be applied at an earlier stage.

Another method will be disclosed. A base station determines a base station to which UE transmits the BSR. The base station transmits information about the determined base station to the UE. The base station that determines the base station to which the UE transmits the BSR may be a master base station. The master base station determines a base station to which the UE transmits the BSR among one or a plurality of base stations connecting to the UE in multi-connectivity. The master base station transmits, to the UE, information about a base station to which the BSR is transmitted (hereinafter, sometimes referred to as a BSR-transmitted base station). The information about the BSR-transmitted base station may be a cell group identifier. Alternatively, the information about the BSR-transmitted base station may be information indicating BSR transmission/BSR non-transmission. The information about the BSR-transmitted base station may be BSR transmission activation/BSR transmission deactivation information. The information may be associated with the cell group identifier.

The information about the BSR-transmitted base station may be transmitted by RRC signaling. The information may be included in a configuration of a cell group and transmitted. As another method, the information about the BSR-transmitted base station may be transmitted by MAC signaling. It is possible to change the BSR-transmitted base station at an early stage. As another method, the information about the BSR-transmitted base station may be transmitted by L1/L2 signaling. It is possible to change the BSR-transmitted base station at an earlier stage. The information about the BSR-transmitted base station to be transmitted by MAC signaling or L1/L2 signaling may be a bitmap. The above may be a bitmap of the number of one or a plurality of base stations constituting multi-connectivity. With the use of the received information about the BSR-transmitted base station, the UE transmits the BSR to a base station configured so that the BSR is transmitted thereto.

The base station that determines the base station to which the UE transmits the BSR may be a secondary base station. One or a plurality of base stations connecting to the UE in multi-connectivity may each determine whether to employ the base station itself as a base station to which the UE transmits the BSR. Thus, each base station can select whether to cause the UE to transmit the BSR depending on the communication status. The UE does not need to transmit a useless BSR to a base station that cannot perform UL scheduling. The information about the BSR-transmitted base station determined by each base station may be transmitted to the UE via the master base station, or may be transmitted to the UE by each base station. As a transmission method, the above-described method may be appropriately applied.

Thus, the base station can configure the BSR-transmitted base station for the UE in a timely way.

The UE may make a request to the master base station for the base station to which the BSR is transmitted. Alternatively, a request for the base station group to which the BSR is transmitted may be made. The master base station configures, for the UE, the base station or the base station group to which the BSR is transmitted. When the UE configures the base station or the base station group to which the BSR is transmitted, there is no need to configure a threshold. The UE preferably transmits the BSR in accordance with the base station or the base station group to which the BSR is transmitted that has been received from the master base station. Thus, the master base station can appropriately configure the base station or the base station group to which the BSR is transmitted depending on the communication status of each base station.

With the method as disclosed in the fourth embodiment, even in a case where the UE performs data transmission to three or more base stations, it is possible to determine a base station to which the BSR is transmitted. The base station can perform scheduling for the UE depending on the BSR. Therefore, the UE can perform communication with a plurality of base stations. In addition, even in a case where three or more base stations are used, efficient scheduling can be executed from the base stations. Therefore, it is possible to improve a communication capacity while maintaining the robustness and reliability of communication.

A statement of "gNB or cell" in the present disclosure means that it may either be a gNB or a cell unless otherwise specified.

The above-described embodiments and modifications thereof are merely examples, and the embodiments and modifications thereof can be freely combined. In addition, any component of the embodiments and modifications thereof can be appropriately changed or omitted.

For example, in the above-described embodiments and modifications thereof, the subframe is an example of a time unit of communication in the fifth generation communication system. The subframe may be a scheduling unit. In the above-described embodiments and modifications thereof, the processes described as those performed on a per subframe basis may be performed on a per TTI basis, on a per slot basis, on a per subslot basis, or on a per minislot basis.

While the present disclosure has been described in detail, the above description is in all aspects illustrative and not restrictive. It is understood that numerous modifications not illustrated can be devised.

### Reference Signs List

200, 210 communication system; 202 communication terminal device (user equipment); 203, 207, 213, 217, 223-1, 224-1, 224-2, 226-1, 226-2, 750 base station device (base station); 204 MME/S-GW unit (MME unit); 204a MME; 214 AMF/SMF/UPF unit (5GC unit); 218 central unit; 219 distributed unit; 301, 403 protocol processing unit; 302 application unit; 303, 404 transmission data buffer unit; 304, 405 encoder unit; 305, 406 modulation unit; 306, 407 frequency conversion unit; 307-1 to 307-4, 408-1 to 408-4 antenna; 308, 409 demodulation unit; 309, 410 decoder unit; 310, 411, 506, 526 control unit; 401 EPC communication unit; 402 otherbase-station communication unit; 412 5GC communication unit; 501 PDN GW communication unit; 502, 522 base station communication unit; 503, 523 user plane communication unit; 504 HeNBGW communication unit; 505, 525 control plane control unit; 505-1, 525-1 NAS security unit; 505-2 SAE bearer control unit; 505-3, 525-3 idle state mobility management unit; 521 data network communication unit; 525-2 PDU session control unit; 527 session management unit; 751-1 to 751-8 beam; 3110, 3130, 3220, 3221, 3320 BAP-PDU; 3115, 3215 function unit; 3125 routing function unit.

## Claims

1. A communication system comprising:
a master base station that is a base station that operates as a master node of dual connectivity in which a communication terminal simultaneously connects to two base stations; and
a secondary base station that is a base station that operates as a secondary node of the dual connectivity, wherein
in a case where a second connection destination change process is required while executing a first connection destination change process that is a process in which a communication terminal changes a master node as a connection destination or a process in which a communication terminal changes a secondary node as a connection destination, the second connection destination change process being a process not falling under the first connection destination change process out of a process in which the master node is changed and a process in which the secondary node is changed, the second connection destination change process is started and the first connection destination change process is canceled.

2. The communication system according to claim 1, wherein
the first connection destination change process is a process in which a communication terminal changes a master node as a connection destination, and the second connection destination change process is a process in which a communication terminal changes a secondary node as a connection destination.

3. The communication system according to claim 1, wherein
the first connection destination change process is a process in which a communication terminal changes a secondary node as a connection destination, and the second connection destination change process is a process in which a communication terminal changes a master node as a connection destination.

4. A communication system comprising:
a master base station that is a base station that operates as a master node of dual connectivity in which a communication terminal simultaneously connects to two base stations;
a secondary base station that is a base station that operates as a secondary node of the dual connectivity; and
a communication terminal capable of simultaneously connecting to the master base station and the secondary base station, wherein
in a case where both a process in which the communication terminal changes a master node as a connection destination and a process in which the communication terminal changes a secondary node as a connection destination are required in a state where the communication terminal is connected to the master base station and the secondary base station,
in a case where the communication terminal selects a new master node as a connection destination prior to a new secondary node as a connection destination, the communication terminal selects the new secondary node as a connection destination on a basis of a selection result of the new master node as a connection destination and a predetermined condition, and in a case where the communication terminal selects a new secondary node as a connection destination prior to a new master node as a connection destination, the communication terminal selects the new master node as a connection destination on a basis of a selection result of the new secondary node as a connection destination and a predetermined condition.

5. The communication system according to any one of claims 1 to 4, wherein
the process in which a communication terminal changes a master node as a connection destination is conditional handover.

6. The communication system according to any one of claims 1 to 4, wherein
the process in which a communication terminal changes a master node as a connection destination is make-before-break handover.

7. The communication system according to claim 6, wherein
in a case where MBB handover that is the make-before-break handover is executed, the master base station transmits make-before-break information necessary for executing the MBB handover to a communication terminal that executes the MBB handover.

8. The communication system according to any one of claims 1 to 4, wherein
the process in which a communication terminal changes a master node as a connection destination is random access channel-less handover.

9. The communication system according to claim 8, wherein
in a case where RACH-less handover that is the random access channel-less handover is executed, the master base station transmits RACH-less handover information necessary for the RACH-less handover to a communication terminal that executes the RACH-less handover.

10. A communication system comprising:
a base station; and
a communication terminal capable of simultaneously connecting to a plurality of base stations, wherein
in a case where the number of base stations being connected is three or more, the communication terminal notifies, among the base stations being connected, one or more base stations satisfying a predetermined condition of data amount information of transmission data held by the communication terminal, and
the one or more base stations perform uplink scheduling for the communication terminal on a basis of the data amount information that the communication terminal has notified the base stations of.
